# EUROPÄISCHE PATENTSCHRIFT

(11) **EP 2 863 506 B1**
(45) Veröffentlichungstag und Bekanntmachung des Hinweises auf die Patenterteilung: **19.06.2019**
(21) Anmeldenummer: 14002919.0
(22) Anmeldetag: 22.08.2014
(51) Int. Cl.: H02G 15/013, H02G 3/22

(54) **Dichtungsscheibe**
Sealing washer
Bague d'étanchéité

(30) Priorität: 18.10.2013 DE 102013017434
(43) Veröffentlichungstag der Anmeldung: 22.04.2015
(73) Patentinhaber: gabo Systemtechnik GmbH, 94559 Niederwinkling (DE)
(72) Erfinder: Geiger, Alexander, 94559 Niederwinkling (DE); Karl, Markus, 94327 Bogen (DE); Lederer, Roland, 94374 Schwarzach (DE)
(74) Vertreter: Schmid, Nils T.F.

(56) Entgegenhaltungen:
- EP-A1- 0 632 557
- EP-A1- 0 695 900
- EP-A1- 1 187 287
- EP-A1- 1 734 627
- WO-A1-2012/008898
- DE-B- 1 161 971
- DE-U1- 29 908 044
- DE-U1-202006 010 637
- US-A1- 2006 042 814

## Beschreibung

Die Erfindung betrifft eine Dichtungsscheibe zum leitungsweisen Abdichten einer Zuführöffnung für eine Leitung, wie ein Kabel oder Kabelschutzrohr, in einen Rohr zum Verlegen von Leitungen oder ein Gehäuse, insbesondere ein Gehäuse einer Einzelzugabdichtung.

Eine Dichtscheibe, die Leitungen beim Zuführen in ein Rohr oder einen ummantelten Leitungsverband mittels einer Einzelzugabdichtung jeweils separat abdichtet, um einen Fluideintritt in das Rohr zu verhindern, ist aus EP 1 187 287 A1 bekannt. Die Dichtscheibe umfasst einen flachen, im Wesentlichen zylindrischen Körper, dessen radiale Außenumfangsfläche als Anpressfläche ausgebildet ist, an der ein Dichtkontakt gegenüber dem Gehäuse der Einzelzugabdichtung gebildet wird. Zwei mit entfernbaren Stopfen verschlossene zylindrische Leitungsdurchgänge erstrecken sich parallel zur Zylinderachse der Dichtscheibe durch die Scheibe hindurch. Die Verschlussstopfen sind jeweils durch einen zylindrischen Kern und mehrere, den Kern konzentrisch ähnlich einer Zwiebelschale umgebende, Ringzylinder oder Dichthülsen gebildet, die mit dem Kern und dem Rest der Scheibe über einen innerhalb einer Radialebene verlaufenden Sollbruchsteg verbunden sind. Die zwiebelschalenartig um den Kern angeordneten Ringzylinder erlauben mit ein und derselben Dichtscheibe Leitungen verschiedener Durchmesser abzudichten. Ein Ringzylinder deckt jeweils einen Abdichtbereich (z. B. 10,5 bis 13,5 mm) ab, in dem Leitungen mit einem Leitungsdurchmesser innerhalb des abgedeckten Bereichs abgedichtet werden können. Zum Freilegen der Leitungsdurchführung sind der Kern und gegebenenfalls ein oder mehrere Ringzylinder aus der Dichtscheibe herauszutrennen. Um die Leitung in die Durchführung einlegen zu können, ist in die Dichtscheibe ein Schlitz eingearbeitet, der die Scheibe von der Außenumfangsfläche bis zum Kern sowie längs deren gesamter axialen Stärke durchdringt. Nachdem die Durchführung freigelegt ist, kann der Schlitz geweitet werden, um die Leitung von radial außen in den Leitungsdurchgang einzusetzen. Der Schlitz hat einen ersten axialparallelen Abschnitt, verspringt in Umfangsrichtung und mündet in einen zweiten relativ zum ersten axialparallelen Abschnitt umfangsversetzten axialparallelen Abschnitt.

Bei der Montage einer Leitung kann es dazu kommen, dass zwischen den aneinanderzulegenden Schlitzdichtkontaktflächen, ein axialer Versatz bestehen bleibt und die Schlitzdichtkontaktflächen nicht vollflächig abdichtend aneinander anliegen. Es stellte sich zudem heraus, dass auf Grund der zunehmenden Vielfalt an Leitungsdurchmessern und Toleranzen gegenüber den Nenndurchmessern der Leitungen trotz der Zwiebelschalenkonstruktion, verschiedene Modelle der bekannten Dichtscheibe notwendig sind, um alle anwenderwunschgemäß abzudichtenden Leitungen unter Einhaltung der spezifizierten Abdichteigenschaften an Rohr- oder Gehäusezuführungen abzudichten.

DE 299 08 044 U1 betrifft eine Dichtungseinheit für Kabel- und Rohrdurchführungen mit Kernen, die zur Aufnahme eines Kabels oder Rohres heraustrennbar sind. Zum Einfügen der Kabel oder Rohre sind zwischen den Durchlässen und dem Umfang Radialschlitze vorgesehen, die entweder bogenförmig oder gekröpft geformt sind. Um verschiedene Durchmesser für Durchbrüche zu realisieren, werden konzentrische, ringförmige Stanzungen vorgenommen.

DE 20 2006 010 637 U1 betrifft ein Dämmstoffelement aus hitzebeständigem Material, vorzugsweise Mineralwolle, mit einer durchgehenden Öffnung, in der eine Rohrschale zur Aufnahme einer Heißleitung angeordnet ist. Zur Aufnahme der Rohrschalen ist ein Sägeschnitt von einer Seitenfläche her eingebracht.

EP 0 632 557 A1 betrifft eine Kabelmuffe aus einem Muffenrohr und stirnseitigen Dichtungskörpern, in die Dichtungskörpereinsätze mit Einführungsöffnungen für Kabel eingesetzt werden. Die variablen Dichtungskörpereinsätze, und auch der Dichtungskörper selbst, sind in Einführungsrichtung längsgeteilt, sodass sie an ungeschnittenen Kabeln einsetzbar sind.

US 2006/0042814 A1 betrifft ein Dichtungselement mit einer äußeren Dichtungsfläche und mehreren Schlitzen zum Einführen von Kabeln in Öffnungen. Um Kabel mit unterschiedlichen Durchmessern und Formen aufnehmen zu können, werden Kabeladapter eingesetzt, die der Form des Kabels angepasst sind.

EP 0 695 900 A1 betrifft Elemente zum Abdichten von Telekommunikationskabeln, wobei eine Dichtungshülse Öffnungen und einen Schlitz mit Rastelementen zur Aufnahme von Kabeln aufweist.

EP 1 734 627 A1 betrifft Dichtungskörper für Kabeldurchführungen, bestehend aus mindestens zwei Teilkörpern, die massiv ausgebildet sind und deren zugewandten Flächen eine Durchsteckebene für Kabel bilden. Diese Flächen sind wellenartig oder mäanderartig oder labyrinthartig ausgebildet.

DE 11 61 971 betrifft eine Muffe bzw. einen Endverschluss für elektrische Kabel.

Es ist Aufgabe der Erfindung, die Nachteile des Standes der Technik zu überwinden, insbesondere eine Dichtscheibe zum leitungsweisen Abdichten einer Zuführung für eine Leitung in ein Rohr oder ein Gehäuse bereitzustellen, die für möglichst viele verschiedene Leitungsdurchmesser über die gesamte Einsatzdauer eine hohe Dichtwirkung bereitstellt sowie schnell und einfach zu montieren ist. Insbesondere besteht die Aufgabe darin, einen axialen Versatz zwischen den Dichtkontaktflächen zu vermeiden.

Diese Aufgabe ist wird durch den Gegenstand der Erfindung gelöst, der in den unabhängigen Ansprüchen angegeben ist.

Gemäß einem ersten Aspekt der Erfindung umfasst eine Dichtungsscheibe zum leitungsweisen Abdichten einer Zuführöffnung für eine Leitung, wie ein Kabel oder Kabelschutzrohr, in ein Rohr zum Verlegen von Leitungen oder ein Gehäuse, insbesondere ein Gehäuse einer Einzelzugabdichtung, eine Anpressumfangsfläche, die einen Dichtkontakt zu dem Rohr oder dem Gehäuse bereitstellt, wenigstens einen Kern, der zur Schaffung einer Durchführaufnahme für die Leitung insbesondere durch Durchtrennen eines Kannbruch- oder Kannreißstegs entfernbar ist und wenigstens eine sich von der Anpressumfangsfläche zum Kern radial, durch die axiale Stärke der Dichtungsscheibe hindurch erstreckende Schlitzung, über die die Leitung radial einsetzbar ist. Erfindungsgemäß ist die Schlitzung durch längs eines Einknüpfprofils aneinander liegende formkomplementäre Schlitzgrenzflächen gebildet.

Das Einknüpfprofil bildet in dessen Verlauf durch die axiale Stärke der Dichtungsscheibe eine Einknüpföffnung sowie eine sich durch die Einknüpföffnung in Dichtscheibenumfangsrich
tung erstreckende Einknüpfabschnitt oder -riegel. Der Einknüpfabschnitt bildet im Einknüpfprofil einen Hin- und Rücksprung jeweils mit einer Umfangsrichtungskomponente, wodurch eine axiale Position, an der die Schlitzgrenzflächen ineinandergreifen sollen festgelegt ist. Die entlang des Einknüpfabschnitts wirkenden Haltekräfte zwischen den formkomplementären Schlitzgrenzflächen erschweren entsprechend einer Knüpfverbindung das Trennen der Schlitzgrenzflächen voneinander. Die Durchführrichtung der Leitung durch die Dichtscheibe ist vorzugsweise parallel zu der Umfangsfläche der Dichtscheibe und/oder zu einer insbesondere durch eine Symmetrieachse, wie eine Rotationssymmetrieachse der Dichtscheibe, definierte Axialrichtung festgelegt. Durch die ortsdefinierte, und eindeutige Einknüpfposition der Schlitzgrenzflächen, besteht selbst bei unachtsamer Montage stets ein vollflächiger Dichtkontakt zwischen beiden Schlitzgrenzflächen. Auf Grund des Ineinandergreifens treten bei der Montage der Dichtkörpers keine Formverspannungen auf, welche die Dauerfestigkeit der Dichtung beeinträchtigen könnten. Es sei klar, dass die Dichtscheibe mehrere Durchführaufnahmen für Leitungen vorsehen kann, die mit einem jeweiligen entfernbaren Kern fluiddicht verschlossen sind und jeweils eine erfindungsgemäße Schlitzung mit Einknüpfprofil aufweisen.

Bei einer bevorzugten Ausführung weist das Einknüpfprofil zwei in einem Axialabstand zueinander, insbesondere auf gleicher Umfangshöhe angeordnete Formkrümmungen oder-knicke auf, die insbesondere in einer der Schlitzgrenzflächen eine Einknüpföffnung in Umfangseinknüpfrichtung bilden. Insbesondere schließt sich an die Formkrümmungen oder- knicke jeweils ein sich mit einer Umfangsrichtungskomponente erstreckender Knüpfkontaktabschnitt an. Insbesondere sind die Knüpfkontaktabschnitte insbesondere zumindest auf Umfangshöhe der Einknüpföffnung in einem Axialabstand zueinander angeordnet. Die durch die Formkrümmungen oder -knicke definierte Einknüpföffnung in der einen Schlitzgrenzfläche erlaubt ein Verknüpfen mit der gegenüberliegenden Schnitzgrenzfläche derart, dass die jeweilige axiale Relativposition der Schlitzgrenzflächen zueinander festgelegt ist. Wird eine durchgeführte Leitung auf Biegung beansprucht werden die Knüpfkontaktabschnitte des Einknüpfprofils stärker aneinander gepresst, wodurch sich die Abdichtwirkung erhöht. Des Weiteren erhöhen die Formkrümmungen oder -knicken den Fluiddurchtrittswiderstand, so dass eine verbesserte Dichtwirkung erreicht ist.

Bei einer bevorzugten Ausführung weist das Einknüpfprofil einen mit einer überwiegenden Umfangsrichtungskomponente verspringenden Knüpfkontaktabschnitt und einen mit einer überwiegenden Umfangsrichtungskomponente zurückspringenden Knüpfkontaktabschnitt auf. Die Umfangsrichtungskomponente ist dabei bei geradliniger Ausbildung des Knüpfkontaktabschnitts wenigstens etwas so groß wie gegebenenfalls eine Axialrichtungskomponente des Knüpfkontaktabschnitts. Bei einer im Bereich eines Knüpfkontaktabschnitts gekrümmt ausgebildeten Schlitzkontaktfläche ist bezüglich der Umfangsrichtungskomponente die Tangente an die Krümmung mit der größten Umfangsrichtungskomponente zu betrachten. Insbesondere überwinden der verspringende Knüpfkontaktabschnitt und der zurückspringende Knüpfkontaktabschnitt jeweils die gleiche Umfangsdistanz. Insbesondere weisen die Knüpfkontaktabschnitte gleichgroße Umfangsrichtungskomponenten auf. Insbesondere sind die Knüpfkontaktabschnitte achsensymmetrisch ausgebildet. Bei einer bevorzugten Ausführung verlaufen die Knüpfkontaktabschnitte senkrecht zur Axialrichtung und/oder parallel zur Umfangsrichtung. Die überwiegende Umfangsrichtungskomponente des jeweiligen Knüpfkontaktabschnitts verhindert ein versehentliches Herausrutschen der entlang des Einknüpfprofils aneinander liegenden Schlitzkontaktflächen.

Bei einer bevorzugten Ausführung weist das Einknüpfprofil wenigstens drei Formknicke oder Formkrümmungen auf. Insbesondere verläuft das Einknüpfprofil zwischen den Formknicken oder Krümmungen geradlinig. Überraschenderweise stellte sich heraus, dass für die üblichen Einbausituationen der Dichtungsscheibe durch Vorsehen von drei oder vier Formknicken im Einknüpfprofil Fluiddurchtrittsenergie in einem derart hohen Maß abgebaut wird, dass über die gesamte Produktlebensdauer unter normalen Umständen ein Fluiddurchtritt ausgeschlossen ist. Weil aufwendigere Einknüpfprofile gegebenenfalls die Fertigungskosten erhöhen, erzielt diese bevorzugte Ausführung ein Optimum aus Dauerdichtigkeit und Herstellungskosten.

Bei einer bevorzugten Ausführung weisen die Schlitzgrenzflächen jeweils wenigstens einen Axialdichtkontaktabschnitt auf, der am Einknüpfprofil zwischen wenigstens zwei Formknicken oder -krümmungen angeordnet ist, wobei sich insbesondere wenigstens der eine Axialdichtkontaktabschnitt über zwischen etwa 1/8 oder etwa 1/6 der axialen Stärke der Dichtungsscheibe erstreckt. Der Axialdichtkontaktabschnitt dient dazu hohe Anpressdichtkontaktflächen zwischen den Schlitzgrenzflächen zu übertragen. Es zeigte sich, dass die Anpresskräfte zwischen den Schlitzgrenzflächen ohne Beeinträchtigung der Dichtleistung verringert werden konnte, weil die durch die Umrahmung des Axialdichtkontaktabschnitts mit Formknicken oder -krümmungen erzielte Dichtwirkung dies ausgleicht. Auf Grund der geringeren Kompression der Dichtscheibe sind die Dichteigenschaften über eine längere Lebensdauer sichergestellt.

Bei einer bevorzugten Ausführung weisen die Schlitzgrenzflächen jeweils wenigstens drei separate Axialdichtkontaktabschnitte auf, die insbesondere jeweils durch wenigsten einen Formknick oder eine Formkrümmung im Einknüpfprofil und/oder einen insbesondere in Umfangsrichtung verlaufenden Knüpfkontaktabschnitt von einem anderen der Axialdichtkontaktabschnitte getrennt sind. Es zeigte sich, dass sich mit Axialdichtkontaktabschnitten abwechselnde in Umfangsrichtung verlaufenden Dicht- und Kontaktabschnitte den Fluiddurchtrittsenergieabbau überproportional steigern.

Bei einer bevorzugten Ausführung sind die Schlitzgrenzflächen jeweils achsensymmetrisch zur axialen Mitte der Dichtungsscheibe ausgebildet. Insbesondere ist die Dichtungsscheibe achsensymmetrisch zur axialen Mitte der Dichtungsscheibe ausgebildet. Aufgrund des achsensymmetrischen Aufbaus ist die Montage der Dichtscheibe vereinfacht. Außerdem ist bei der Fertigung wegen der gleichmäßig verteilten Spannung beim Stanzen der Schlitzung die Maßgenauigkeit verbessert, was sich positiv in der Abdichtwirkung niederschlägt.

Erfindungsgemäß bildet eine der Schlitzgrenzflächen eine Einknüpftasche aus und die andere Schlitzgrenzfläche eine Einknüpfnase, wobei die Taschentiefe oder Nasenhöhe in Umfangsrichtung 1/5 bis 1/3 des Dichtungsscheibendurchmessers beträgt. Bei einer bevorzugten Ausführung beträgt die axiale Taschenbreite oder Nasenbreite wenigstens 20% der axialen Stärke der Dichtungsscheibe. Die Taschen-/Nasenkonfiguration stellt einen intuitiv zu bedienenden Einknüpfverschlussmechanismus zum radialen Einsetzen von Leitungen in die Dichtscheibe bereit. Es stellte sich heraus, dass bei den bevorzugten geometrischen Verhältnissen zwischen Nasenhöhe und Nasenbreite relativ zum Dichtungsscheibendurchmesser bzw. Dichtungsscheibenstärke insbesondere bei den bevorzugten Dichtungsscheibenmaterialien sich ein Optimum aus Montagefähigkeit und Abdichtwirkung einstellt.

Ein weiterer Aspekt, der mit dem vorbeschriebenen Aspekt und dessen bevorzugten Ausführungen kombinierbar ist, betrifft eine Dichtungsscheibe zum leitungsweisen Abdichten einer Zuführöffnung für eine Leitung, wie ein Kabel oder Kabelschutzrohr, in ein Rohr zum Verlegen von Leitungen oder ein Gehäuse, insbesondere ein Gehäuse einer Einzelzugabdichtung, die eine Anpressumfangsfläche, die einen Dichtkontakt zum dem Rohr oder Gehäuse bereitstellt und wenigstens einen Kern, der zur Schaffung einer Durchführaufnahme für die Leitung entfernbar ist, umfasst. Die Dichtungsscheibe weist wenigstens eine sich von der Anpressumfangsfläche zum Kern radial, durch die axiale Stärke der Dichtungsscheibe hindurch erstreckende Schlitzung auf, über die die Leitung radial einsetzbar ist, sowie wenigstens eine konzentrisch um den entfernbaren Kern angeordnete entfernbare Dichthülse, die mit dem entfernbaren Kern über einen sich in einer Radialebene erstreckenden Kannbruch- oder Kannreißsteg verbunden ist und eine Hülseninnenwandung zum Herstellen eines Dichtkontakts mit der Leitung aufweist. Erfindungsgemäß weitet und/oder verengt sich die Hülseninnenwandung in deren Axialverlauf.

Durch die Weitung und/oder Verengung lässt sich der Durchgang wenigstens axialabschnittsweise auf die zulässigen in den Durchgang einlegbaren Leitungsdurchmessern abstimmen, so dass innerhalb der Grenzleitungsdurchmesser eine Leitung durch einen Abschnitt der Hülseninnenwandung mit einem genau passenden Hülseninnendurchmesser vollumfänglich den exakten Leitungsabmaßen entsprechend abgedichtet ist. Somit konnte für eine weitaus größere Anzahl von Leitungsdurchmessern als bisher, einschließlich deren Fertigungstoleranz, ein optimaler Dichtkontakt mit einer einzigen Dichtscheibe bereitgestellt werden. Es sei klar, dass die Hülseninnenwandung einer Dichthülse, solange der entfernbare Kern oder eine radialkonzentrisch innenliegende entfernbare Dichthülse über den Kannbruch- oder Kannreißsteg mit der Dichthülse verbunden ist, durch den Kannbruch- oder Kannreißsteg in zwei Axialabschnitte geteilt. Nach Entfernen des Kerns und gegebenenfalls einer oder mehrerer Dichthülsen, ist die Hülseninnenwandung zur Freigabe einer Durchführaufnahme durch die axiale Stärke der Dichtungsscheibe durchgehend freigelegt.

Bei einer bevorzugten Ausführung weitet und/oder verjüngt sich die Hülseninnenwandung konisch. Vorzugsweise verjüngt sich die Hülseninnenwandung von einer axialen Außenseite der Dichtscheibe vorzugsweise konstant bis zum herausgetrennten Kannbruch oder Kannreißsteg und weitet sich die Hülseninnenwandung konisch vorzugsweis konstant bis zur gegenüberliegenden axialen Außenseite der Dichtungsscheibe. Aufgrund der Weitung und/oder Verengung der Hülseninnenwandung in deren Axialverlauf verringert bzw. erweitert sich der lichte Durchmesser des Durchgangs durch die Dichtscheibe, in den eine Leitung eingelegt wird, kontinuierlich. Mit dieser Maßnahme liegt ein stufenloser Bereich zulässiger Leitungsdurchmesser vor.

Bei einer bevorzugten Ausführung weitet und/oder verjüngt sich die Hülseninnenwandung unter Ausbildung wenigstens eines Absatzes stufenförmig. Mittels eines stufenförmigen Absatzes verdoppelt sich die Anzahl der passend mit einer Dichthülse abdichtbaren Leitungsdurchmesser oder wird die Belastung auf die Dichthülse bei Einsetzen einer Leitung mit maximal zulässigem Durchmesser abschnittsweise weniger stark gedehnt. Vorzugsweise ist die Hülseninnenwandung abgesehen von dem wenigstens einen Absatz axialparallel ausgebildet. Vorzugsweise sind jeweils wenigstens ein Absatz an der Hülseninnenwandung im Axialverlauf vor der Position des Kannbruch- oder Kannreißstegs und ein Absatz im Axialverlauf nach der Position des Kannbruch- oder Kannreißstegs ausgebildet.

Bei einer bevorzugten Ausführung weist die wenigstens eine Dichthülse eine konstante radiale Wandstärke auf. Es sei klar, dass mehrere konzentrisch um den Kern und eine erste Dichthülse angeordnete Dichthülsen vorgesehen sein können, auf die die vor- und nachbeschriebenen Eigenschaften in gleicher Weise zutreffen. Insbesondere kann die Dichtscheibe eine zur den Außenwandungen der Dichthülsen und/oder des Kerns formkomplementär ausgebildete Innenwandung aufweisen.

Bei einer bevorzugten Ausführung weist die wenigstens eine Dichthülse eine nach axial außen insbesondere symmetrisch zu einer axialen Mitte der Dichtscheibe abnehmende Wandstärke auf. Aufgrund der in den axialen Außenbereichen niedrigeren Wandstärke ergibt sich eine höhere Flexibilität der Dichthülsen im axialen Außenbereich, so dass eine hohe Dichtwirkung auch dann noch erzielt ist, wenn die durchgeführte Leitung unmittelbar im Anschluss an die Dichtscheibe gekrümmt geführt ist.

Bei einer bevorzugten Ausführung weitet und/oder verjüngt sich eine Hülsenaußenwandung der wenigstens einen Dichthülse in deren Axialverlauf radial insbesondere konisch. Vorzugsweise ist die radiale Weitung bzw. Verengung formgleich mit der Weitung bzw. Verengung der Hülseninnenwandung ausgebildet. Über die Gestalt der Hülsenaußenwandung lässt sich ein zwischen den Dichthülsen und/oder dem Kern gebildeter und vom Kannbruch- oder Kannreißsteg überbrückter Verformungsraum konstruktiv anpassen, so dass je nachdem ob abschnittsweise oder entlang des gesamten Axialverlaufs ein großer bzw. kleiner Ausgleichsraum bereitgestellt ist, entsprechend höhere oder niedrigere Anpresskräfte auf die Hülseninnenwandung der abdichtenden Dichthülse übertragen werden.

Bei einer bevorzugten Ausführung verjüngt sich die Hülsenaußenwandung konisch von der axialen Mitte der Dichtscheibe nach axial außen. Damit wird erreicht, dass im axialen Außenbereich der Dichthülse die höchsten radialen Abdichtkräfte auf eine eingesetzte Leitung wirken. Bei einer alternativen bevorzugen Ausführung weitet oder verjüngt sich die Hülsenaußenwandung unter Ausbildung eines Wandungsabsatzes in der axialen Mitte der Dichtscheibe.

Bei einer bevorzugten Ausführung erstreckt sich eine Hülsenaußenwandung der wenigstens einen Dichthülse parallel zur Hülseninnenwandung und/oder erstreckt sich eine Hülsenaußenwandung der wenigstens einen Dichthülse axial parallel.

Bei einem weiteren Aspekt der Erfindung, der eine bevorzugte Ausführung der vorgenannten Aspekte ist, ist eine Dichtungsscheibe vorgesehen, die zum leitungsweisen Abdichten einer Zuführöffnung für eine Leitung, wie ein Kabel oder ein Kabelschutzrohr, in ein Rohr zum Verlegen von Leitungen oder ein Gehäuse, insbesondere ein Gehäuse einer Einzelzugabdichtung dient. Die Dichtungsscheibe umfasst eine Anpressumfangsfläche, die einen Dichtkontakt zu dem Rohr oder dem Gehäuse bereitstellt, wenigstens einen Kern, der zur Schaffung einer Durchführaufnahme für die Leitung entfernbar ist, wenigstens eine sich von der Anpressumfangsfläche zum Kern radial, durch die axiale Stärke der Dichtungsscheibe hindurch erstreckende Schlitzung, über die die Leitung radial einsetzbar ist, und mehrere konzentrisch um den entfernbaren Kern angeordnete entfernbare Dichthülsen, die miteinander mit dem entfernbaren Kern über einen sich in Radialrichtung erstreckenden Kannbruch- oder Kannreißsteg verbunden sind. Erfindungsgemäß weist wenigstens eine der Dichthülsen eine unterschiedliche radiale Wandstärke auf als die anderen konzentrisch um den entfernbaren Kern angeordneten Dichthülsen.

Mit der erfindungsgemäßen Maßnahme lässt sich eine gleichmäßigere Dichtwirkung über die verschiedenen bei einer Dichtscheibe zulässigen Leitungsdurchmesser durch eine Anpassung der radialen Wandstärke einer oder mehrerer Dichthülsen erreichen. Es zeigte sich, dass die über die auf die Anpressumfangsfläche wirkenden Kräfte eine inhomogene Spannungsverteilung in der Dichtscheibe in Bereichen niedriger Kompression in Radialrichtung durch Erhöhung der Dichthülsenwandstärke bzw. in Bereichen niedriger Kompression in Radialrichtung durch Verringerung der Dichthülsenwandstärke ausgeglichen werden konnte. Somit konnte weitestgehend gleiche Abdichteigenschaften der jeweiligen Dichthülsen unabhängig von deren konzentrischer Anordnung innerhalb der Dichtscheibe sichergestellt werden.

Bei einer bevorzugten Ausführung nimmt die maximale radiale Wandstärke der Dichthülsen von der radial äußersten Dichthülse zu der radial innersten Dichthülse zu. Insbesondere ist die radial innerste Dichthülse 1, 2-mal so stark wie die radial äußerste Dichthülse.

Bei einer bevorzugten Ausführung ist der Unterschied zwischen den Wandstärken einer Dichthülse größter und einer Dichthülse geringster Wandstärke mehr als 5% und maximal 30%, insbesondere liegt der Unterschied der Wandstärken zwischen 10% und 25%, vorzugsweise zwischen 10% und 20%, jeweils bezogen auf die Wandstärke der Dichthülse geringster Wandstärke.

Bei einer bevorzugten Ausführung umfassen die Dichthülsen jeweils einen insbesondere axial mittig angeordneten Hülsenaxialabschnitt hoher Wandstärke und wenigstens einen insbesondere axial außermittig, vorzugsweise symmetrisch zur axialen Mitte der Dichthülse angeordneten Hülsenaxialabschnitt niedriger Wandstärke. Vorzugsweise ist der Hülsenaxialabschnitt hoher Wandstärke durch einen stufenförmigen Absatz vom Hülsenaxialabschnitt niedriger Wandstärke getrennt. Insbesondere weist der Hülsenaxialabschnitt hoher Wandstärke einer der Dichthülsen eine unterschiedliche radiale Ringzylinderwandstärke als die jeweiligen Hülsenaxialabschnitte hoher Wandstärke der anderen Dichthülsen auf.

Bei einer bevorzugten Ausführung besteht die Dichtungsscheibe aus einem Elastomer, wie einem thermoplastischen Elastomer oder Ethylen-Propylen-Dien-Kautschuk (EPDM).

Weitere Eigenschaften, Vorteile und Merkmale der Erfindung werden durch die folgende Beschreibung bevorzugter Ausführungen der Erfindung anhand der beiliegenden Zeichnungen deutlich, in denen zeigen:
- Fig. 1a: eine perspektivische Ansicht einer ersten Ausführung einer erfindungsgemäßen Dichtscheibe;
- Fig. 1b: eine perspektivische Ansicht der Dichtscheibe nach Fig. 1a, bei der eine Durchführaufnahme für eine Leitung freigelegt ist;
- Fig. 1c: eine Seitenansicht der Dichtscheibe nach Fig. 1a;
- Fig. 2a: eine perspektivische Ansicht einer zweiten Ausführung einer erfindungsgemäßen Dichtscheibe;
- Fig. 2b: eine Seitenansicht der Dichtscheibe nach Fig. 2a;
- Fig. 3a: eine perspektivische Ansicht einer dritten Ausführung einer erfindungsgemäßen Dichtscheibe;
- Fig. 3b: eine Seitenansicht der Dichtscheibe nach Fig. 3a;
- Fig. 4a: eine perspektivische Ansicht eines vierten Ausführungsbeispiels einer erfindungsgemäßen Dichtscheibe;
- Fig. 4b: eine Seitenansicht der Dichtscheibe nach Fig. 4a;
- Fig. 5a: eine Querschnittsansicht einer fünften Ausführung einer erfindungsgemäßen Dichtscheibe;
- Fig. 5b: ein vergrößerter Ausschnitt der Querschnittsansicht von Fig. 5a;
- Fig. 6a: eine Querschnittsansicht einer sechsten Ausführung einer erfindungsgemäßen Dichtscheibe;
- Fig. 6b: ein vergrößerter Ausschnitt aus Fig. 6a;
- Fig. 7a: eine Querschnittsansicht einer siebten Ausführung einer erfindungsgemäßen Dichtscheibe;
- Fig. 7b: ein vergrößerter Ausschnitt aus Fig. 7a;
- Fig. 8a: eine Querschnittsansicht einer achten Ausführung einer erfindungsgemäßen Dichtscheibe;
- Fig. 8b: ein vergrößerter Ausschnitt aus Fig. 8a;
- Fig. 8c: eine Querschnittsansicht der Dichtscheibe nach Fig. 8a, wobei eine Durchführaufnahme für eine Leitung durch Heraustrennen eines Kerns freigelegt ist;
- Fig. 8d: ein vergrößerter Ausschnitt von Fig. 8c.

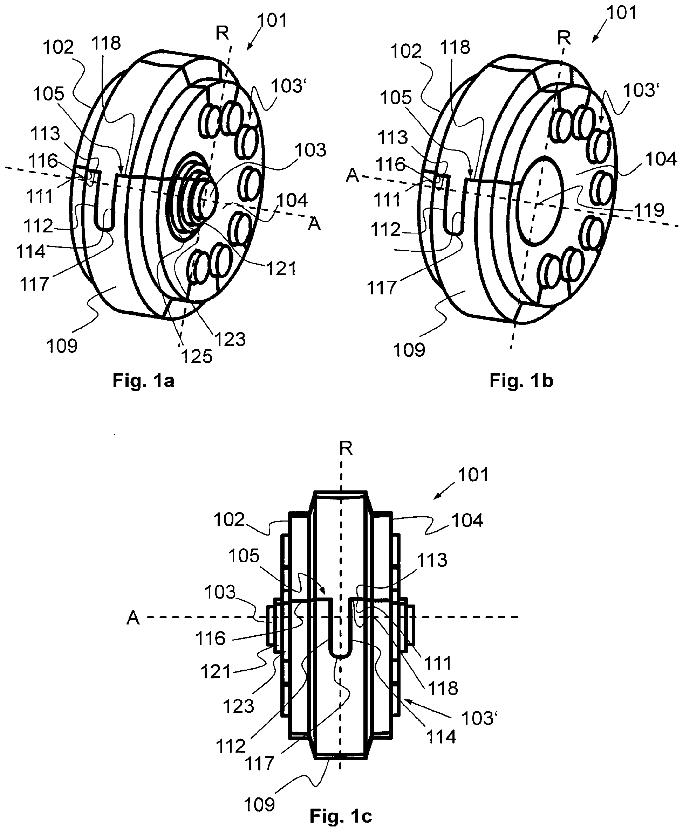

In den Figuren 1a bis 1c ist eine erste Ausführung der erfindungsgemäßen Dichtscheibe im Allgemeinen mit der Bezugsziffer 101 versehen. Die Dichtscheibe 101 ist einstückig aus einem Elastomer, wie einem thermoplastischen Elastomer oder Ethylenpropylendienkautschuk (EPDM) ausgebildet. Die Dichtscheibe 101 weist eine rotationssymmetrische um eine Hauptachse ausgebildete, zylindrische Gestalt auf. Insbesondere die Dichtscheibe 101 aus mehreren, um eine gemeinsame Zylinderachse umlaufenden und in Axialrichtung unmittelbar aneinander anschließenden, zylindrischen oder kegelstumpfförmigen Abschnitten zusammengesetzt, die unterschiedliche Außendurchmesser aufweisen, so dass auf dem Außenumfang der Dichtscheibe 101 ringförmig geschlossen umlaufende Radialabsätze ausgebildet sind.

Wie insbesondere in Figur 1c zu erkennen ist, ist die Dichtscheibe 101 in Axialrichtung durch jeweils eine kreisförmige, in einer Radialebene liegende Axialseite 102, 104 begrenzt. Der radiale Außenumfang verbindet die Axialseiten 102, 104 und bildet eine um die Dichtscheibe 101 kontinuierlich umlaufende Anpressumfangsfläche 109. Wird die Dichtscheibe zur Abdichtung eines Zugangs in ein Rohr zum Verlegen eines Leitungsbündels oder eines Gehäuses verwendet, wird die Dichtscheibe 101 in eine die Dichtscheibe 101 radial umgebenden Aufnahmestruktur derart eingesetzt, dass die Anpressumfangsfläche 109 einen Dichtkontakt an der Aufnahmestruktur des Rohrs oder des Gehäuses bildet. Die Anpressumfangsfläche 109 weist eine bezüglich der axialen Stärke der Dichtscheibe 101 mittig angeordnete Hauptanpressfläche sowie zwei achsensymmetrisch bezüglich der axialen Mitte angeordneten Hilfsanpressflächen auf, die um 5% bis 10% des Dichtscheibendurchmessers nach radial innen zurückversetzt sind. Somit kommen die Hilfsanpressflächen nur dann in einen Dichtkontakt, sofern das Gehäuse oder das Rohr, in den die Dichtscheibe eingesetzt wird, eine zumindest teilweise zum Außenumfang der Dichtscheibe 101 formkomplementär ausgebildete Aufnahmestruktur aufweist. Die Hilfsanpressflächen sind mit der Hauptanpressfläche über jeweils einen relativ zu einer reinen Radialebene geneigten Flankenabschnitt verbunden, der bei entsprechender Ausgestaltung der Dichtscheibenaufnahme ebenfalls als Hilfsanpressfläche wirkt.

Wie insbesondere in den Figuren 1a und 1c zu erkennen ist, umfasst die Dichtscheibe 101 einen auf beiden Axialseiten 102, 104 der Dichtscheibe 101 axial hervorstehenden, um eine Achse A ausgebildeten zylindrischen Kern 103. Der Kern 103 ist von drei konzentrisch zum Kern 103 angeordneten Dichtringzylindern oder Dichthülsen 121, 123, 125 eingefasst. Die Dichthülsen 121, 123, 125 haben jeweils unterschiedliche axiale Abmessungen und stehen über die Axialseiten 102, 104, symmetrisch zur axialen Mitte der Dichtscheibe 101 unterschiedlich weit über, so dass sich eine Abstufung zum Kern 103 ergibt. Der Kern 103 ist axial größer als die Dichthülsen 121, 123, 125 dimensioniert und steht über beide Axialseiten 102, 104 und über die Dichthülsen 121, 123, 125 hervor. Das Paket aus den Dichthülsen 121, 123, 125 und dem Kern 103 wird von der übrigen Dichtscheibe 1 ringförmig eingeschlossen. Der Kern 103 und die Dichtzylinderringe 121, 123, 125 sind untereinander und mit der übrigen Dichtscheibe 101 über einen Kannbruch- oder Kannreißsteg, der sich in einer axial mittigen Radialebene scheibenförmig erstreckt, einstückig verbunden. Der Kern 103 und eine beliebe Anzahl der kernumgebenden Dichthülsen 121, 123, 125 können manuell oder unter Einsatz eines Schneidwerkzeugs aus der Dichtscheibe 101 herausgetrennt werden, um einen Durchführraum 119 für eine Leitung zu schaffen, wie insbesondere in Fig. 1b erkennbar ist. Das Volumen und der minimale und maximale Innendurchmesser des freigelegten Durchführraums 119 hängt davon ab, ob nur der Kern 103 oder zusätzlich ein oder mehrere Dichthülsen 121, 123, 125 herausgetrennt werden. Mittels Heraustrennen von Kern 103 und Dichthülsen 121, 123, 125 kann somit ein einer Leitung mit einem bestimmten Leitungsdurchmesser zugeordneter Durchführraum 119 freigelegt werden.

Neben dem von Dichthülsen 121, 123, 125 zwiebelschalenartig umschlossenen Kern 103 sind sechs weitere Kerne 103' in der Dichtscheibe 1 vorgesehen, die jeweils über die Axialseiten 102, 104 der Dichtscheibe 1 gleichweit hervorstehen. Die Kerne 103' sind ebenfalls einstückig über einen Kannbruch- oder Kannreißsteg mit der Dichtscheibe 101 verbunden und zum Schaffen weiterer Durchführräume für Leitungen, Kabel oder Kabelrohre aus der Dichtscheibe 101 heraustrennbar. Die Kerne 103' können in weiteren, nicht dargestellten Ausführungen der Erfindung in gleicher Weise wie der Kern 103 ausgebildet sein.

Von der Anpressumfangfläche 109 aus erstreckt sich in Radialrichtung entlang der gesamten axialen Stärke der Dichtscheibe 101 eine Schlitzung 105 durch die Dichthülsen 121, 123, 125 bis zum Kern 103. Die Schlitzung 105 erlaubt nach dem Entfernen des Kerns 103 und ggf. einer oder mehrerer Dichthülsen 121, 123, 125 eine Leitung radial in den Durchführraum 119 einzusetzen. Dazu können zwei durch die Schlitzung 105 voneinander getrennte, gegenüberliegende Schlitzgrenzflächen 111, 113 auseinander gezogen werden, um einen Einlegespalt zu bilden. Die Schlitzgrenzflächen 111, 113 schließen auf Grund der Elastizität des Dichtscheibenmaterials den Einlegespalt selbsttätig. Des Weiteren ist zum radialen Einsetzen einer Leitung einem jeweiligen der Kerne 103' eine Schlitzung zugeordnet, die sich ebenfalls von der radialen Anpressumfangsfläche 109 längs der gesamten axialen Stärke der Dichtscheibe und in Radialrichtung bis zum Kernabschnitt 103' erstreckt und in gleicher Weise wie die Schlitzung 105 ausgestaltet sein kann.

Wie insbesondere in Fig. 1c zu erkennen ist, weist die Schlitzung 105 ein entlang der in Umfangsrichtung gegenüberliegenden und in einem Schlitzverschlusszustand aneinander liegenden Schlitzgrenzflächen 111, 113 verlaufendes Profil auf, das erfindungsgemäß als Einknüpfprofil ausgebildet ist. Die Schlitzgrenzflächen 111, 113 sind formkomplementär zueinander ausgebildet, so dass bezüglich einer Schlitzgrenzfläche 111, 113 beschriebene Eigenschaften formkomplementär entsprechend auf die jeweils andere Schlitzgrenzfläche 111, 113 zutreffen. Zur Ausbildung eines Einknüpfprofils erstrecken sich die Schlitzgrenzflächen 111, 113 von den Axialseiten 102, 104 entlang eines ersten axialparallelen Axialdichtkontaktabschnitts 116, 118 durch die Dichtscheibe 101 auf die axiale Mitte zu und weisen zwei Flächenformknickstellen auf, an denen die Schlitzgrenzflächen 111, 113 jeweils in einen umfangsrichtungsparallelen Abschnitt übergehen. Die Formknickstellen der Schlitzgrenzfläche 111 legen eine Einknöpföffnung fest, durch die eine Knüpfnase, die die formkomplementär ausgebildete gegenüberliegende Schlitzgrenzfläche 113 bildet, hindurch in einen Knüpfkontakt einführbar ist. Ein Knüpfkontakt ist durch jeweils zwei umfangsrichtungsparallele Knüpfkontaktabschnitte 112, 114 an jeder Schlitzgrenzflächen 111, 113 gebildet. Die Knüpfkontaktabschnitte 112, 114 einer Schlitzgrenzfläche 111, 113 sind in einem axialen Abstand von einem Fünftel der axialen Stärke der Dichtscheibe 101 zueinander angeordnet. Die Knüpfkontaktabschnitte 112, 114 einer jeweiligen Schlitzgrenzfläche 111, 113 sind in einem Umfangsrichtungsabstand von einem Viertel des Dichtscheibendurchmessers zu den Formknickstellen durch jeweils einen abgerundeten, axialtangential verlaufenden Axialdichtkontaktabschnitt 117 miteinander verbunden. Die Schlitzgrenzfläche 111 formt eine Einknüpftasche, in die eine durch die Schlitzgrenzfläche 113 gegenüberliegend formkomplementär ausgebildete Einknüpfnase abdichtend eingesteckt werden kann. Die jeweiligen axialparallelen Axialdichtkontaktabschnitte 116, 118 und der gekrümmte Axialdichtkontaktabschnitt 117 der Schlitzgrenzflächen 111, 113 nehmen über die Anpressumfangsfläche 109 in die Dichtscheibe 101 eingebrachte Dichtkontaktkräfte auf und übertragen diese über die Schlitzung 105 hinweg zwischen den Schlitzgrenzflächen 111, 113. Die an die Einknüpföffnung anschließenden Knüpfkontaktabschnitte 112, 114 stellen einen Reib- und Dichtkontakt zwischen den Schlitzgrenzflächen 111, 113 bereit, wodurch eine Öffnungs- oder Ausknüpftendenz gemindert ist. Bezugnehmend auf Fig. 1c verspringt das Einknüpfprofil von einem jeweiligen ersten Axialdichtkontaktabschnitt 116, 118 der Schlitzgrenzflächen 111, 113 in reiner Umfangsrichtung hin zum zweiten Axialdichtkontaktabschnitt 117 und in reiner Umfangsrichtung zurück zu einem dritten Axialdichtkontaktabschnitt 118, 116. Zwischen jeweils zwei Axialdichtkontaktabschnitten 116, 117, 118 eine jeweiligen Schlitzgrenzfläche 111, 113 ist jeweils wenigstens ein Formknick in der Schlitzgrenzfläche 111, 113 ausgebildet, so dass sich eine komplexe Labyrinthdichtung ergibt.

Es sollte klar sein, dass ein erfindungsgemäßes Einknüpfprofil sowohl beim Kern 103 als auch bei den Kernen 103' vorgesehen sein kann.

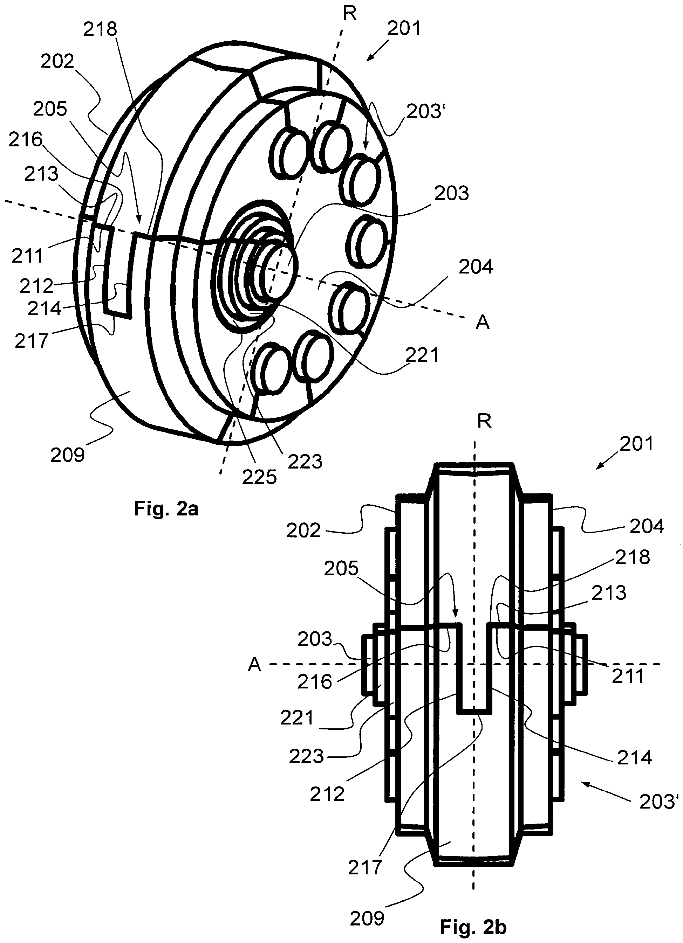

In den Figuren 2a und 2b ist eine zweite erfindungsgemäße Ausführung einer Dichtscheibe dargestellt, wobei zur besseren Lesbarkeit der Figurenbeschreibung und zur Vermeidung von Wiederholungen, für identische und ähnliche Bestandteile der Dichtscheibe der zweiten Ausführung die gleichen Bezugsziffern wie bei der Ausführung gemäß den Figuren 1a bis 1c verwendet wurden, die um 100 erhöht sind.

Die Dichtscheibe 201 unterscheidet sich von der Dichtscheibe 101 darin, dass der jeweilige Axialdichtkontaktabschnitt 217 der Schlitzgrenzflächen 211, 213, der die in Umfangsrichtung verlaufenden Knüpfkontaktbereiche 212, 214 der Schlitzgrenzflächen 211, 213 verbindet, geradlinig, insbesondere axialparallel, ausgebildet ist und die Übergänge zu den in Umfangsrichtung verlaufenden Knüpfkontaktbereichen 212, 214 der Schlitzgrenzflächen 211, 213 jeweils als Formknick mit einen Winkel von 90° ausgebildet sind, wie insbesondere in Fig. 2b zu erkennen ist. Die Anzahl von Formknickstellen zwischen jeweils zwei der Axialdichtkontaktabschnitte 116, 117, 118 verdoppelt sich somit, wodurch die Dichtwirkung in Axialrichtung verbessert ist.

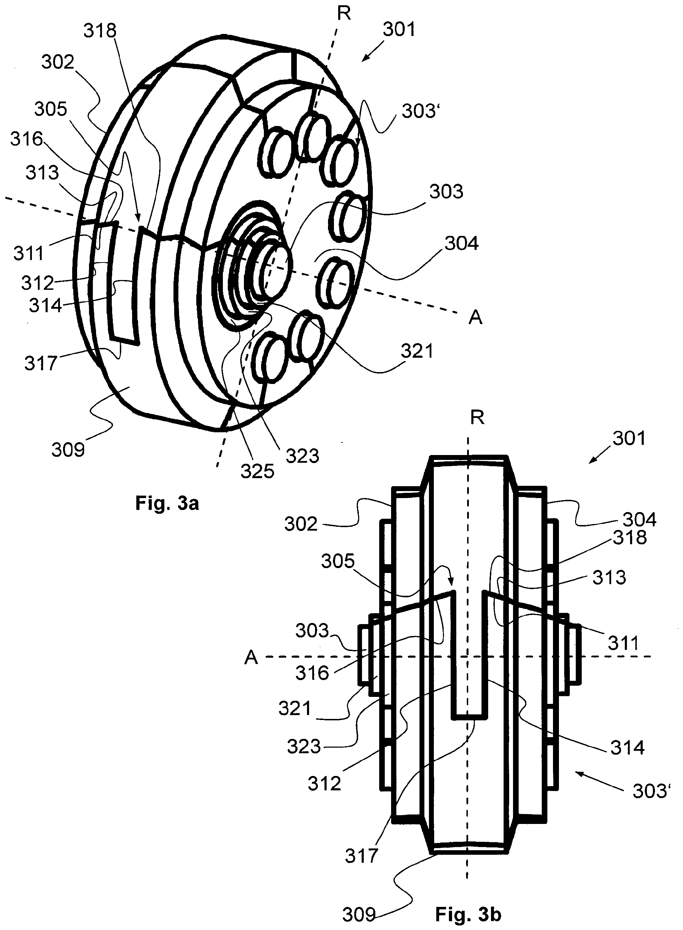

In den Figuren 3a und 3b ist eine dritte erfindungsgemäße Ausführung einer Dichtscheibe dargestellt, wobei zur besseren Lesbarkeit der Figurenbeschreibung und zur Vermeidung von Wiederholungen, für identische und ähnliche Bestandteile der Dichtscheibe der zweiten Ausführung die gleichen Bezugsziffern wie bei der Ausführung gemäß den Figuren 1a bis 1c bzw. 2a und 2b verwendet wurden, die um 100 bzw. 200 erhöht sind.

Die Dichtscheibe 301 unterscheidet sich von der Dichtscheibe der Figuren 2a und 2b darin, dass die jeweiligen den beiden Axialseiten 302, 304 nahen Axialdichtkontaktabschnitte 316, 318 der Schlitzgrenzflächen 311, 313 eine überwiegende axialparallele Richtungskomponente sowie eine Umfangsrichtungskomponente aufweisen. Die Axialdichtkontaktabschnitte 316, 318 sind eben mit einem Winkel von etwa 20° relativ zur Axialrichtung ausgebildet. Durch die Neigung der Axialdichtkontaktabschnitte 316, 318 verlängern sind bei sonst gleichbleibender Ausgestaltung der Dichtscheibe 301 im Vergleich zur Dichtscheibe 201 die jeweiligen zur Umfangsrichtung parallelen Knüpfkontaktabschnitte 312, 314 der Schlitzgrenzflächen 311, 313 auf etwa jeweils ein Viertel des Dichtscheibendurchmessers. Zwischen den axialseitennahen Axialdichtkontaktabschnitten 316, 318 und den umfangsparallelen Knüpfkontaktabschnitten 312, 314 ist ein spitzer Winkel gebildet, mit dem eine Dichtsitzverbesserung und eine höherer lokaler Dichtkontaktdruck erreicht ist.

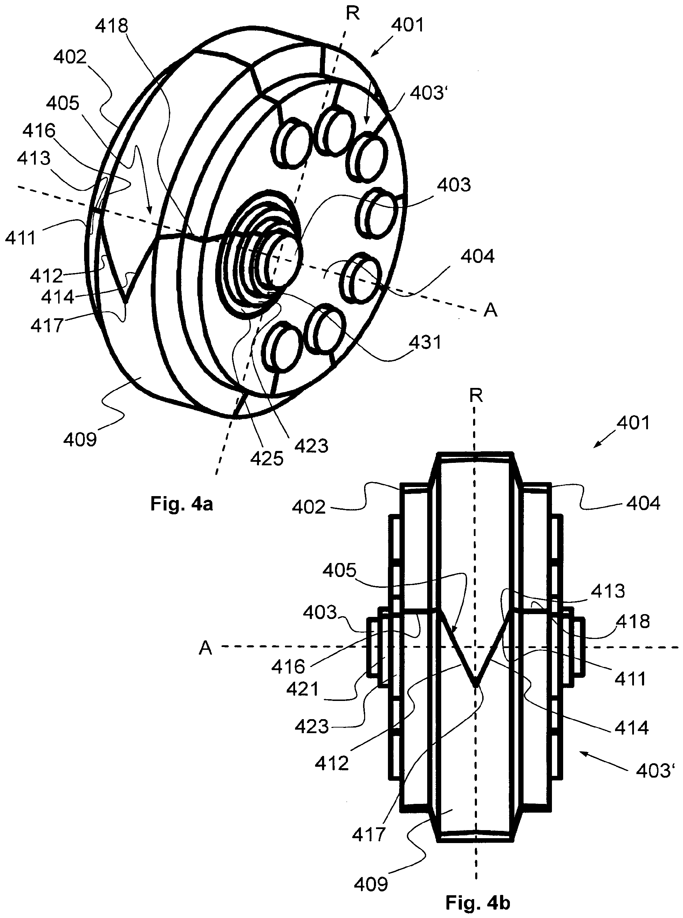

In den Figuren 4a und 4b ist eine vierte erfindungsgemäße Ausführung einer Dichtscheibe dargestellt, wobei zur besseren Lesbarkeit der Figurenbeschreibung und zur Vermeidung von Wiederholungen, für identische und ähnliche Bestandteile der Dichtscheibe der vorherigen Ausführungen die gleichen Bezugsziffern wie bei der Ausführung gemäß den Figuren 1a bis 1c, 2a und 2b bzw. 3a und 3b verwendet wurden, die um 100, 200 bzw. 300 erhöht sind.

Die Dichtscheibe 401 unterscheidet sich insbesondere von der Ausführung gemäß den Figuren 2a und 2b darin, dass die jeweiligen Knüpfkontaktabschnitte 412, 414 der Schlitzgrenzflächen 411, 413 nicht lotrecht zur Axialrichtung verlaufen, sondern sowohl eine Komponente in Axialrichtung als auch eine überwiegende Komponente in Umfangsrichtung aufweisen. Die jeweiligen Knüpfkontaktabschnitte 412, 414 verlaufen in einem Winkel von etwa 70° relativ zur Axialrichtung und treffen sich in einer jeweiligen Formknickkante der Schlitzgrenzflächen 111, 113 in der axialen Mitte der Dichtscheibe 401. Die jeweilige Formknickkante in der axialen Mitte bildet den Axialdichtkontaktabschnitt 417, an dem über die Anpressumfangsfläche 409 eingebrachte Dichtkontaktkräfte von einer Schlitzgrenzfläche 411, 413 auf die jeweils andere Schlitzgrenzfläche 413, 411 übertragen werden.

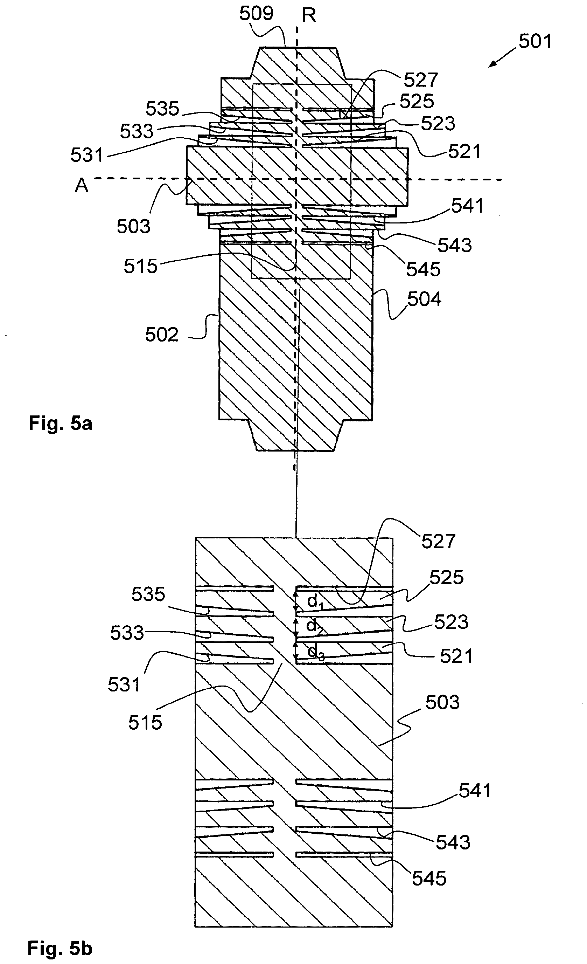

In den Figuren 5a und 5b ist eine fünfte erfindungsgemäße Ausführung einer Dichtscheibe dargestellt, wobei zur besseren Lesbarkeit der Figurenbeschreibung und zur Vermeidung von Wiederholungen, für identische und ähnliche Bestandteile der Dichtscheibe der fünften Ausführung die gleichen Bezugsziffern wie bei den vorherigen Ausführung gemäß den Figuren 1a bis 1c, 2a und 2b, 3a und 3b bzw. 4a und 4b verwendet wurden, die um 100, 200, 300 bzw. 400 erhöht sind.

Die Dichtscheibe 501 unterscheidet sich von der Dichtscheibe der Figuren 4a und 4b darin, dass sie lediglich einen Kern 503 aufweist, wobei klar sein sollte, dass weitere Durchführungsverschlussstopfen 503', wie in den vorangehenden Ausführungsbeispielen gezeigt, in gleicher Weise bei der Dichtscheibe 501 vorgesehen sein können. Auf Grund der Lage der Schnittebene ist die Schlitzung mit dem Einknüpfprofil in den Figuren 5a und 5b nicht sichtbar. Der Kern 503 ist in Radialrichtung durch drei den Kern konzentrisch umgebende Dichtringzylinder 521, 523, 525 zwiebelschalenartig umgeben, die mit dem Kern, untereinander sowie mit dem die Dichtringzylinder 521, 523, 525 und den Kern 503 einfassenden Rest der Dichtscheibe 501 über den Kannbruch- oder Kannreißsteg 515 einstückig trennbar ausgebildet. Die Dichtringzylinder 521, 523, 525 bilden jeweils eine Ringzylinderinnenwand 531, 533, 535 aus, die der Kannbruch- oder Kannreißsteg 515 axial mittig in zwei axiale Ringwandhälften aufteilt.

Durch Heraustrennen des Kerns 503 und/oder eines der Dichtringzylinder 521, 523, 525 aus der Dichtscheibe 501 kann ein Durchführraum freigegeben werden, der durch die Ringzylinderinnenwand 531, 533, 535 des radial innersten verbleibenden Dichtzylinderrings 521, 523, 525 begrenzt ist. Die Dichtringzylinder 521, 523, 525 sind jeweils mit einer von axial innen, nach axial außen abnehmenden Wandstärke ausgebildet, so dass höchste Wandstärke und größte Dichtanpresswirkung in der axialen Mitte besteht. Die Ringzylinderaußenwände 541, 543, 545 der Dichtringzylinder 521, 523, 525 sind jeweils zylindrisch, konzentrisch um den Kern 503 ausgebildet. Die Ringzylinderinnenwände 531, 533, 535 sind zur jeweiligen Ringzylinderaußenwand 541, 543, 545 um etwa 5° geneigt. Die Ringzylinderinnenwände 531, 533, 535 der Dichtringzylinder 521, 523, 525 weiten sich somit umfangsgleichmäßig jeweils von dem axial mittig angeordneten Kannbruch- oder Kannreißsteg 515 der Dichtscheibe 501 hin zu der Axialseite 502, 504. Die Ringzylinderinnenwände 531, 533, 535 stellen in einen Bereich, der vom maximalen Innendurchmesser und minimalen Innendurchmesser einer jeweiligen Ringzylinderinnenwand 531, 533, 535 bestimmt ist, übergangslos für beliebige Leitungsdurchmesser innerhalb des Bereichs eine optimalen exakt dem Umfang des Leitung entsprechenden Dichtkontaktbereich bereit.

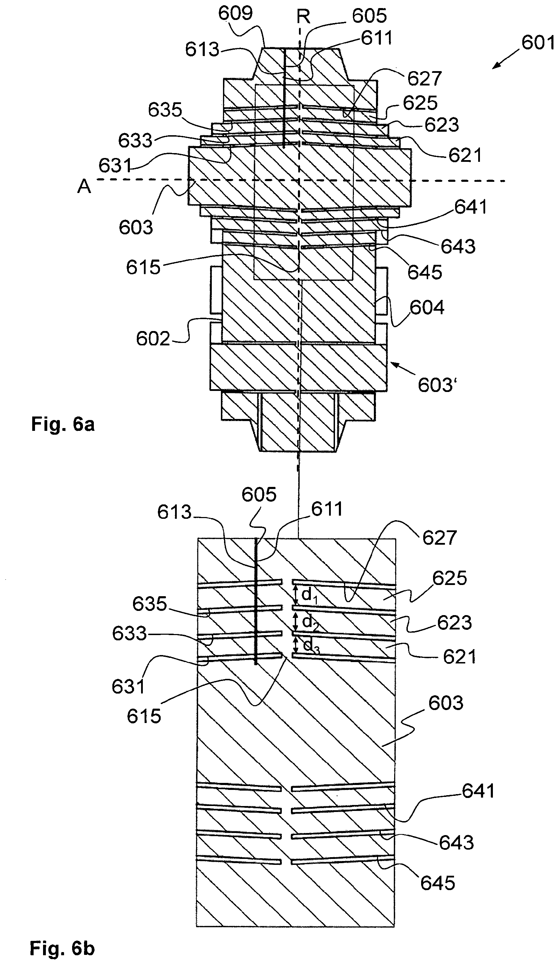

In den Figuren 6a und 6b ist eine sechste erfindungsgemäße Ausführung einer Dichtscheibe dargestellt, wobei zur besseren Lesbarkeit der Figurenbeschreibung und zur Vermeidung von Wiederholungen, für identische und ähnliche Bestandteile der Dichtscheibe der fünften Ausführung die gleichen Bezugsziffern wie bei der Ausführung gemäß den Figuren 5a und 5b verwendet wurden, die um 100 erhöht sind.

Die Dichtscheibe 601 unterscheidet sich von der Dichtscheibe der Figuren 5a und 5b darin, dass sich die Ringzylinderinnenwände 631, 633, 635 der Dichtringzylinder 621, 623, 625 sowie eine Durchführbereichsbegrenzungswand 627, die die Zwiebelschalenanordnung der Dichtringzylinder 621, 623 625 und des Kerns 603 begrenzt, von den Axialseiten 602, 604 aus hin zum axial mittigen Kannbruch- oder Kannreißsteg 615 konisch weiten. Die Dichtringzylinder 621, 623, 625 haben eine konstante Zylinderwandstärke. Dies führt dazu, dass sich die Ringzylinderaußenwände 641, 643, 645 der Dichtringzylinder 621, 623, 625 in dem gleichem Maß wie die Ringzylinderinnenwände 631, 633, 635 von den Axialseiten 602, 604 aus hin zum axial mittigen Kannbruch- oder Kannreißsteg 615 konisch weiten. Die Außenseite des Kerns 603, die Ringzylinderinnenwände 631, 633, 635 und die Ringzylinderaußenwände 641, 643, 645 sind auf einer jeweiligen Seite des Kannbruch- oder Kannreißstegs 615 konzentrisch (parallel in der Schnittebenendarstellung) zueinander ausgebildet. Außer dem Kern 603 weis die Dichtscheibe 601 weitere Durchführungsverschlussstopfen 603' auf. Jeweils über die Axialseiten 602, 604 der Dichtscheibe 601 überstehende Endbereiche des radial innersten und radial mittigen Dichtringzylinders 621, 623 sind rein hohlzylindrisch, insbesondere ohne Konizität oder Neigung bezüglich der Axialachse der Dichtscheibe 601 ausgebildet. Die Schnittebene ist derart gewählt, dass ein Abschnitt der Schlitzung 605 durch die Schnittebene tritt.

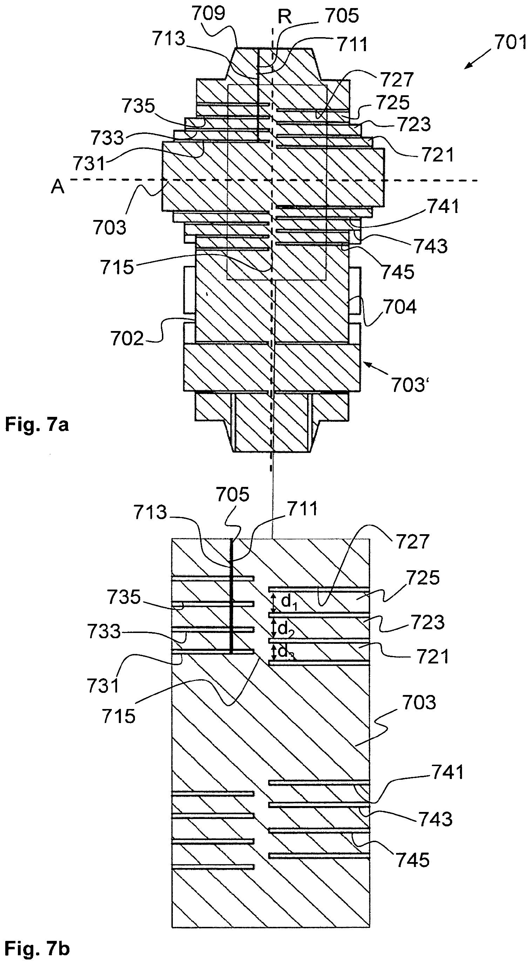

In den Figuren 7a und 7b ist eine siebte erfindungsgemäße Ausführung einer Dichtscheibe dargestellt, wobei zur besseren Lesbarkeit der Figurenbeschreibung und zur Vermeidung von Wiederholungen, für identische und ähnliche Bestandteile der Dichtscheibe der sechsten Ausführung die gleichen Bezugsziffern wie bei der Ausführung gemäß den Figuren 6a und 6b verwendet wurden, die um 100 erhöht sind.

Die Dichtscheibe 701 unterscheidet sich von der Dichtscheibe der Figuren 6a und 6b darin, dass sowohl die Dichtringzylinderinnenwände 731, 733, 735 als auch die Ringzylinderaußenwände 741, 743, 745 der Dichtringzylinder 721, 723, 725 rein zylindrisch oder ohne Konizität oder Neigung bezüglich der Axialachse der Dichtscheibe 701 ausgebildet sind. Die sich jeweils vom Kannbruch- oder Kannreißsteg 715 zu den axialen Seiten 702, 704 der Dichtscheibe 701 weg erstreckenden Dichtringzylinderabschnitte weisen links- und rechtsseitig des Kannbruch- oder Kannreißstegs unterschiedliche Innenradien bei konstanter Ringzylinderwandstärke auf, so dass sich nach dem Heraustrennen des Kerns 703 und/oder eines der Dichtringzylinder 721, 723, 725 im Bereich des Kannbruch- oder Kannreißstegs 715 ein Absatz in der Ringzylinderinnenwand des radial innen liegenden verbleibenden Dichtringzylinders ausbildet, an dem sich Durchführraum stufenförmig verjüngt oder weitet.

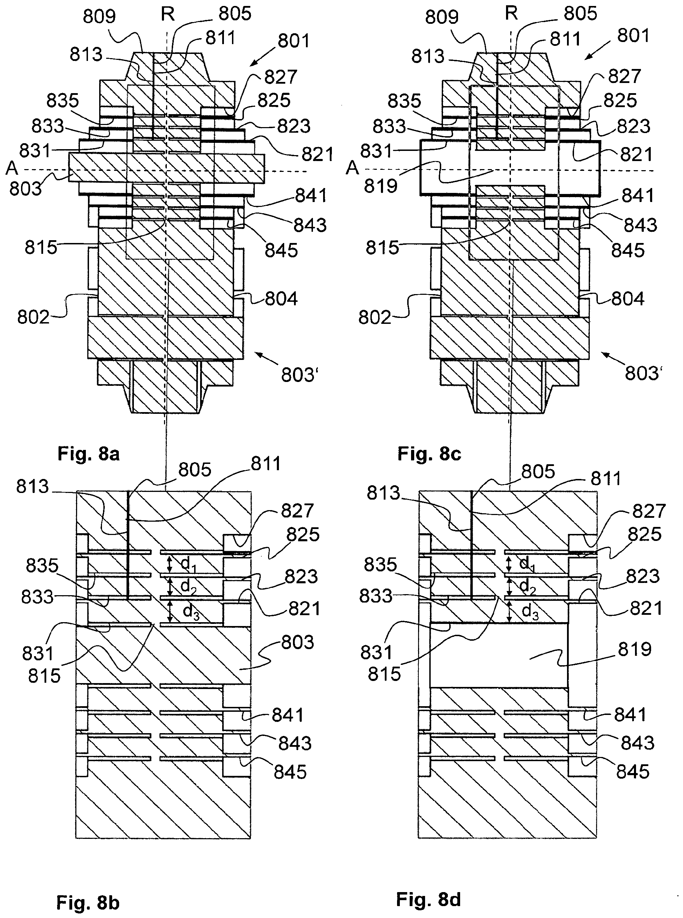

In den Figuren 8a bis 8d ist eine achte erfindungsgemäße Ausführung einer Dichtscheibe dargestellt, wobei zur besseren Lesbarkeit der Figurenbeschreibung und zur Vermeidung von Wiederholungen, für identische und ähnliche Bestandteile der Dichtscheibe der siebten Ausführung die gleichen Bezugsziffern wie bei der Ausführung gemäß den Figuren 7a und 7b verwendet wurden, die um 100 erhöht sind.

Die Dichtscheibe 801 unterscheidet sich von der Ausführung der Figuren 7a und 7b darin, dass die Dichtringzylinder 821, 823, 825 jeweils einen axial mittig angeordneten Ringzylinderabschnitt hoher Wandstärke und zwei symmetrisch um die axiale Mitte radial außen angeordnete Abschnitte niedriger Wandstärke aufweisen, so dass jeweils zwischen einer der Axialseiten 802, 804 und der axialen Mitte der Dichtscheibe ein Absatz in einer jeweiligen der Ringzylinderinnenwände 831, 833, 835 gebildet ist, so dass sich der Durchführraum 819 zur axialen Mitte hin stufenweise verjüngt. Die Durchführbereichsbegrenzungswand 827 weist auf der gleichen axialen Höhe wie die Dichtringzylinder 821, 823, 825 jeweils einen Absatz auf.

Der radial äußerste Dichtringzylinder 825 weist im Abschnitt hoher Wandstärke eine kleinere Wandstärke d₁ als die anderen Dichtringzylinder 823, 821 auf. Der radial innerste Dichtringzylinder 821 weist im Abschnitt hoher Wandstärke eine größere Wandstärke d₃ als die anderen Dichtringzylinder 823, 825 auf. Alle drei Dichtringzylinder 821, 823, 825 betrachtend, nimmt die Wandstärke d₁, d₂, d₃ vom radial äußersten Dichtringzylinder 825 zum radial innersten Dichtringzylinder 821 zu. In den Fig. 8c und 8d ist illustrationshalber aus der Dichtscheibe 801 gemäß den Figuren 8a und 8b der Kern 803 entfernt.

### Bezugszeichenliste

- 101, 201, 301, 401, 501, 601, 701, 801: Dichtscheibe
- 102, 104, 202, 204, 302, 304, 402, 404: Axialseite
- 502, 504, 602, 604,702, 704, 802, 804: Axialseite
- 103, 103', 203, 203', 303, 303', 403, 403': Kern
- 503, 503', 603, 603', 703, 703', 803, 803': Kern
- 105, 205, 305, 405, 505, 605, 705, 805: Schlitzung
- 109, 209, 309, 409, 509, 609, 709, 809: Anpressumfangsfläche
- 111, 113, 211, 213, 311, 313, 411, 413: Schlitzgrenzflächen
- 112, 114, 212, 214, 312, 314, 412, 414: Knüpfkontaktabschnitte
- 515, 615, 715, 815: Kannbruch- oder Kannreißsteg
- 116, 118, 216, 218, 316, 318, 416, 418: Axialdichtkontaktabschnitte
- 117,217,317,417: Axialdichtkontaktabschnitt
- 119 219, 319, 419, 519, 619, 719, 819: Durchführraum
- 121, 123, 125, 221, 223, 225: Dichtringzylinder oder Dichthülsen
- 321, 323, 325, 421, 423, 425: Dichtringzylinder oder Dichthülsen
- 521, 523, 525, 621, 623, 625,: Dichtringzylinder oder Dichthülsen
- 721, 723, 725, 821, 823, 825: Dichtringzylinder oder Dichthülsen
- 531, 533, 535, 631, 633, 635,: Ringzylinderinnenwände
- 731, 733, 735, 831, 833, 835: Ringzylinderinnenwände
- 541, 543, 545, 641, 643, 645,: Ringzylinderaußenwände
- 741, 743, 745, 841, 843, 845: Ringzylinderaußenwände
- 527, 627, 727, 827: Durchführbereichsbegrenzungswand
- d₁, d₂, d₃: Wandstärke

## Patentansprüche

1. Dichtungsscheibe zum leitungsweisen Abdichten einer Zuführöffnung für eine Leitung, wie ein Kabel oder Kabelschutzrohr, in ein Rohr zum Verlegen von Leitungen oder ein Gehäuse, umfassend:
- eine Anpressumfangsfläche (109, 209, 309, 409, 509, 609, 709, 809), die einen Dichtkontakt zu dem Rohr oder dem Gehäuse bereitstellt;
- wenigstens einen Kern (103, 203, 303, 403, 503, 603, 703, 803), der zur Schaffung einer Durchführaufnahme für die Leitung entfernbar ist; und
- wenigstens eine sich von der Anpressumfangsfläche (109, 209, 309, 409, 509, 609, 709, 809) zum Kern radial, durch die axiale Stärke der Dichtungsscheibe (101, 201, 301, 401, 501, 601, 701, 801) hindurch erstreckende Schlitzung (105, 205, 305, 405, 605, 705, 805), über die die Leitung radial einsetzbar ist,
wobei die Schlitzung (105, 205, 305, 405, 605, 705, 805) durch längs eines Einknüpfprofils aneinanderliegende formkomplementäre Schlitzgrenzflächen (111, 113, 211, 213, 311, 313, 411, 413, 611, 613, 711, 713, 811, 813) gebildet ist, wobei eine der Schlitzgrenzflächen (111, 113, 211, 213, 311, 313, 411, 413, 611, 613, 711, 713, 811, 813) eine Einknüpftasche ausbildet und die andere Schlitzgrenzfläche eine Einknüpfnase, **dadurch gekennzeichnet, dass** die Taschentiefe oder Nasenhöhe in Umfangsrichtung 1/5 bis 1/3 des Dichtungsscheibendurchmessers beträgt.

2. Dichtungsscheibe nach Anspruch 1, **dadurch gekennzeichnet, dass** das Einknüpfprofil zwei in einem Axialabstand zueinander, insbesondere auf gleicher Umfangshöhe angeordnete Formkrümmungen oder -knicke aufweist, die insbesondere eine Einknüpföffnung in einer der Schlitzgrenzflächen (111, 113, 211, 213, 311, 313, 411, 413, 611, 613, 711, 713, 811, 813) bilden und an die sich insbesondere jeweils ein Knüpfkontaktabschnitt (112, 114, 212, 214, 312, 314, 412, 414) anschließt.

3. Dichtungsscheibe nach einem der vorstehenden Ansprüche, **dadurch gekennzeichnet, dass** das Einknüpfprofil einen mit einer überwiegenden Umfangsrichtungskomponente verspringenden Knüpfkontaktabschnitt (112, 212, 312, 412) und einen mit einer überwiegenden Umfangsrichtungskomponente zurückspringenden Knüpfkontaktabschnitt (114, 214, 314, 414) aufweist, wobei insbesondere die Knüpfkontaktabschnitte (112, 114, 212, 214, 312, 314, 412, 414) um die gleiche Umfangdistanz verspringen und/oder gleiche Umfangsrichtungskomponenten aufweisen und/oder senkrecht zur Axialrichtung verlaufen, und/oder dass das Einknüpfprofil wenigstens drei Formknicke oder -krümmungen aufweist, wobei insbesondere das Einknüpfprofil zwischen den Formknicken oder -krümmungen geradlinig verläuft.

4. Dichtungsscheibe nach einem der vorstehenden Ansprüche, **dadurch gekennzeichnet, dass** die Schlitzgrenzflächen (111, 113, 211, 213, 311, 313, 411, 413, 611, 613, 711, 713, 811, 813) jeweils wenigstens einen Axialdichtkontaktabschnitt (117, 217, 317, 417) aufweisen, der im Einknüpfprofil zwischen wenigstens zwei Formknicken oder -krümmungen angeordnet ist, wobei sich insbesondere der wenigstens eine Axialdichtkontaktabschnitt (117, 217, 317, 417) über zwischen 1/8 und 1/6 der axialen Stärke der Dichtungsscheibe (101, 201, 301, 401, 501, 601, 701, 801) erstreckt.

5. Dichtungsscheibe nach einem der vorstehenden Ansprüche, **dadurch gekennzeichnet, dass** die Schlitzgrenzflächen (111, 113, 211, 213, 311, 313, 411, 413, 611, 613, 711, 713, 811, 813) jeweils wenigstens drei separate Axialdichtkontaktabschnitte (116, 117, 118, 216, 217, 218, 316, 317, 318, 416, 417, 418) aufweisen, die insbesondere jeweils durch wenigstens eine Formkrümmung oder einen Formknick im Einknüpfprofil und/oder einen insbesondere in Umfangsrichtung verlaufenden Knüpfkontaktabschnitt (112, 114, 212, 214, 312, 314, 412, 414) von einem anderen der Axialdichtkontaktabschnitte (116, 117, 118, 216, 217, 218, 316, 317, 318, 416, 417, 418) getrennt sind.

6. Dichtungsscheibe nach einem der vorstehenden Ansprüche, **dadurch gekennzeichnet, dass** die Schlitzgrenzflächen (111, 113, 211, 213, 311, 313, 411, 413, 611, 613, 711, 713, 811, 813) jeweils achsensymmetrisch relativ zur axialen Mitte der Dichtungsscheibe (101, 201, 301, 401, 501, 601, 701, 801) ausgebildet sind, und/oder die axiale Taschenbreite oder Nasenbreite wenigstens 20% der axialen Stärke der Dichtungsscheibe (101, 201, 301, 401, 501, 601, 701, 801) beträgt.

7. Dichtungsscheibe nach einem der vorstehenden Ansprüche, umfassend wenigstens eine konzentrisch um den entfernbaren Kern (503, 603, 703, 803) angeordnete entfernbare Dichthülse (521, 523, 525, 621, 623, 625, 721, 723, 725, 821, 823, 825), die mit dem entfernbaren Kern (503, 603, 703, 803) über einen sich in einer Radialebene erstreckenden Kannbruch- oder Kannreißsteg (515, 615, 715, 815) verbunden ist und eine Hülseninnenwandung (531, 533, 535, 631, 633, 635, 731, 733, 735, 831, 833, 835) zum Herstellen eines Dichtkontakts mit der Leitung aufweist, **dadurch gekennzeichnet, dass** sich die Hülseninnenwandung (531, 533, 535, 631, 633, 635, 731, 733, 735, 831, 833, 835) in deren Axialverlauf radial weitet und/oder verengt.

8. Dichtungsscheibe nach Anspruch 7, **dadurch gekennzeichnet, dass** sich die Hülseninnenwandung (531, 533, 535, 631, 633, 635) konisch weitet und/oder verjüngt, und/oder dass sich die Hülseninnenwandung (731, 733, 735, 831, 833, 835) unter Ausbildung wenigstens eines Absatzes stufenförmig weitet und/oder verjüngt, wobei insbesondere die Hülseninnwandung (731, 733, 735, 831, 833, 835) abgesehen von dem wenigstens einen Absatz axialparallel ausgebildet ist und/oder jeweils wenigstens ein Absatz an der Hülseninnenwandung (831, 833, 835) im Axialverlauf vor und nach dem Kannbruch- oder Kannreißsteg (815) ausgebildet ist.

9. Dichtungsscheibe nach einem der vorstehenden Ansprüche 6 bis 8, **dadurch gekennzeichnet, dass** die wenigstens eine Dichthülse (621, 623, 625, 721, 723, 725) eine konstante radiale Wandstärke aufweist, und/oder dass die wenigstens eine Dichthülse (521, 523, 525, 821, 823, 825) eine nach axial außen insbesondere symmetrisch zu einer axialen Mitte der Dichtscheibe (501, 801) abnehmende Wandstärke aufweist.

10. Dichtungsscheibe nach einem der vorstehenden Ansprüche, **dadurch gekennzeichnet, dass** sich eine Hülsenaußenwandung (641, 643, 645, 741, 743, 745) der wenigstens einen Dichthülse (621, 623, 625, 721, 723, 725) in deren Axialverlauf radial insbesondere konisch weitet und/oder verjüngt, wobei insbesondere sich die Hülsenaußenwandung (641, 643, 645) konisch von der axialen Mitte der Dichtscheibe (601) nach axial außen verjüngt oder die Hülsenaußenwandung (741, 743, 745) unter Ausbildung eines Wandungsabsatzes in der axialen Mitte der Dichtscheibe (701) radial weitet oder verjüngt.

11. Dichtungsscheibe nach einem der Ansprüche 6 bis 9, **dadurch gekennzeichnet, dass** sich eine Hülsenaußenwandung (641, 643, 645, 741, 743, 745, 841, 843, 845) der wenigstens einen Dichthülse (621, 623, 625, 721, 723, 725, 821, 823, 825) parallel zur Hülseninnenwandung erstreckt und/oder sich eine Hülsenaußenwandung (541, 543, 545, 741, 743, 745, 841, 843, 845) der wenigstens einen Dichthülse (521, 523, 525, 721, 723, 725, 821, 823, 825) axialparallel erstreckt.

12. Dichtungsscheibe nach einem der vorstehenden Ansprüche, umfassend mehrere konzentrisch um den entfernbaren Kern (503, 603, 703, 803) angeordnete Dichthülsen (521, 523, 525, 621, 623, 625, 721, 723, 725, 821, 823, 825), die miteinander und mit dem entfernbaren Kern (503, 603, 703, 803) über einen sich in Radialrichtung erstreckenden Kannbruch- oder Kannreißsteg (515, 615, 715, 815) verbunden sind, **dadurch gekennzeichnet, dass** wenigstens eine der Dichthülsen (521, 523, 525, 621, 623, 625, 721, 723, 725, 821, 823, 825) eine unterschiedliche radiale Wandstärke aufweist als die anderen (521, 523, 525, 621, 623, 625, 721, 723, 725, 821, 823, 825) Dichthülsen.

13. Dichtungsscheibe nach Anspruch 12, **dadurch gekennzeichnet, dass** die maximale radiale Wandstärke der Dichthülsen (821, 823, 825) vom der radial äußersten Dichthülse (825) zu der radial innersten Dichthülse (821) zunimmt, wobei insbesondere die radial innerste Dichthülse (821) 1,2 mal so stark wie die radial äußerste Dichthülse (825) ist, und/oder dass der Unterschied der Wandstärken einer Dichthülse höchster und einer Dichthülse geringster Wandstärke mehr als 5% und maximal 30%, insbesondere zwischen 10% und 25%, vorzugsweise 20%, bezogen auf die Wandstärke des Dichthülse geringster Wandstärke beträgt.

14. Dichtungsscheibe nach einem der Ansprüche 12 oder 13, **dadurch gekennzeichnet, dass** die Dichthülsen (821, 823, 825) jeweils einen insbesondere axial mittig angeordneten Hülsenaxialabschnitt hoher Wandstärke und wenigstens einen insbesondere axial außermittig angeordneten Hülsenaxialabschnitt niedriger Wandstärke umfassen, der vorzugsweise vom Hülsenaxialabschnitt hoher Wandstärke durch einen stufenförmigen Absatz getrennt ist, wobei insbesondere der Hülsenaxialabschnitt hoher Wandstärke eines der Dichtringzylinder (821, 823, 825) eine unterschiedliche radiale Ringzylinderwandstärke (d₁, d₂, d₃) als die jeweiligen Hülsenaxialabschnitte hoher Wandstärke der anderen Dichtringzylinder (823, 825, 821) aufweist.

15. Dichtungsscheibe nach einem der vorstehenden Ansprüche, **dadurch gekennzeichnet, dass** die Dichtungsscheibe (101, 201, 301, 401, 501, 601, 701, 801) aus einem Elastomer, wie einem thermoplastischen Elastomer oder Ethylen-Propylen-Dien-Kautschuk besteht.

## Claims

1. Sealing disc for sealing, in a conductor line-like manner, a supply opening for a line, such as a cable or a cable protecting tube, into a tube for installing lines or into a housing, comprising:
- a circumferential pressing surface (109, 209, 309, 409, 509, 609, 709, 809) providing a sealing contact to the tube or to the housing;
- at least one core (103, 203, 303, 403, 503, 603, 703, 803) which is removable for forming a feed-through opening for the line; and
- at least one slot (105, 205, 305, 405, 605, 705, 805), extending from the circumferential pressing surface (109, 209, 309, 409, 509, 609, 709, 809) radially to the core through the axial thickness of the sealing disc (101, 201, 301, 401, 501, 601, 701, 801), through which the line can be inserted radially,
wherein the slot (105, 205, 305, 405, 605, 705, 805) is formed by shape-complementary slot boundary surfaces (111, 113, 211, 213, 311, 313, 411, 413, 611, 613, 711, 713, 811, 813) resting on each other along a tie-in profile, wherein one of the slot boundary surfaces (111, 113, 211, 213, 311, 313, 411, 413, 611, 613, 711, 713, 811, 813) forms a tie-in recess and the other slot boundary surface forms a tie-in projection,
**characterized in that** the recess depth or the projection height in the circumferential direction is 1/5 to 1/3 of the sealing disc diameter.

2. The sealing disc according to claim 1, **characterized in that** the tie-in profile comprises two shape curves or bends arranged in an axial distance from each other, in particular at the same circumferential height, which two shape curves or bends in particular form a tie-in opening in one of the slot boundary surfaces (111, 113, 211, 213, 311, 313, 411, 413, 611, 613, 711, 713, 811, 813) and to which in particular a tie-in contact section connects.

3. The sealing disc according to one of the preceding claims, **characterized in that** the tie-in profile comprises a tie-in contact section (112, 212, 312, 412) offset with a predominant circumferential directional component and a tie-in contact section (114, 214, 314, 414) recessed with a predominant circumferential directional component, wherein in particular the tie-in contact sections (112, 114, 212, 214, 312, 314, 412, 414) are offset by the same circumferential distance and/or comprise the same circumferential directional components and/or extend perpendicular to the axial direction, and/or that the tie-in profile comprises at least three shape bends or curves, wherein in particular the tie-in profile extends rectilinear between the shape bends or curves.

4. The sealing disc according to one of the preceding claims, **characterized in that** the slot boundary surfaces (111, 113, 211, 213, 311, 313, 411, 413, 611, 613, 711, 713, 811, 813) each comprise at least one axial sealing contact section (117, 217, 317, 417) arranged in the tie-in profile between at least two shape bends or curves, wherein in particular the at least one axial sealing contact section (117, 217, 317, 417) extends along between 1/8 and 1/6 of the axial thickness of the sealing disc (101, 201, 301, 401, 501, 601, 701, 801).

5. The sealing disc according to one of the preceding claims, **characterized in that** the slot boundary surfaces (111, 113, 211, 213, 311, 313, 411, 413, 611, 613, 711, 713, 811, 813) each comprise at least three separate axial sealing contact sections (116, 117, 118, 216, 217, 218, 316, 317, 318, 416, 417, 418), which in particular each are separated from another of the axial sealing contact sections (116, 117, 118, 216, 217, 218, 316, 317, 318, 416, 417, 418) by at least one shape curve or one shape bend in the tie-in profile and/or one tie-in contact section (112, 114, 212, 214, 312, 314, 412, 414), in particular extending in the circumferential direction.

6. The sealing disc according to one of the preceding claims, **characterized in that** the slot boundary surfaces (111, 113, 211, 213, 311, 313, 411, 413, 611, 613, 711, 713, 811, 813) each are formed axially symmetric to the axial centre of the sealing disc (101, 201, 301, 401, 501, 601, 701, 801) and/or the axial recess width or projection width is at least 20% of the axial thickness of the sealing disc (101, 201, 301, 401, 501, 601, 701, 801).

7. The sealing disc according to one of the preceding claims, comprising at least one removable sealing sleeve (521, 523, 525, 621, 623, 625, 721, 723, 725, 821, 823, 825) arranged concentrically around the removable core (503, 603, 703, 803) which is connected to the removable core (503, 603, 703, 803) via a predetermined breaking web or a predetermined tearing web (515, 615, 715, 815) extending in a radial plane and comprises an inner sleeve wall (531, 533, 535, 631, 633, 635, 731, 733, 735, 831, 833, 835) for establishing a sealing contact with the line, **characterized in that** the inner sleeve wall (531, 533, 535, 631, 633, 635, 731, 733, 735, 831, 833, 835) radially widens and/or tapers along its axial extension.

8. The sealing disc according to claim 7, **characterized in that** the inner sleeve wall (531, 533, 535, 631, 633, 635) conically widens and/or tapers and/or that the inner sleeve wall (731, 733, 735, 831, 833, 835) widens and/or tapers in steps forming at least one shoulder, wherein in particular the inner sleeve wall (731, 733, 735, 831, 833, 835), apart from the at least one shoulder, is formed axially parallel and/or at least one respective shoulder is formed on the inner sleeve wall (831, 833, 835) in front of and behind the predetermined breaking web or the predetermined tearing web (815) along the axial extension.

9. The sealing disc according to one of the preceding claims 6 to 8, **characterized in that** the at least one sealing sleeve (621, 623, 625, 721, 723, 725) has a constant radial wall thickness and/or that the at least one sealing sleeve (521, 523, 525, 821, 823, 825) has a wall thickness tapering axially towards the outside, in particular symmetrically to an axial centre of the sealing disc (501, 801).

10. The sealing disc according to one of the preceding claims, **characterized in that** an outer sleeve wall (641, 643, 645, 741, 743, 745) of the at least one sealing sleeve (621, 623, 625, 721, 723, 725) radially, in particular conically, widens and/or tapers along its axial extension, wherein in particular the outer sleeve wall (641, 643, 645) conically tapers from the axial centre of the sealing disc (601) axially towards the outside or the outer sleeve wall (741, 743, 745) radially widens or tapers forming a wall shoulder in the axial centre of the sealing disc (701).

11. The sealing disc according to one of the claims 6 to 9, **characterized in that** an outer sleeve wall (641, 643, 645, 741, 743, 745, 841, 843, 845) of the at least one sealing sleeve (621, 623, 625, 721, 723, 725, 821, 823, 825) extends parallel to the inner sleeve wall and/or an outer sleeve wall (541, 543, 545, 741, 743, 745, 841, 843, 845) of the at least one sealing sleeve (521, 523, 525, 721, 723, 725, 821, 823, 825) extends axially parallel.

12. The sealing disc according to one of the preceding claims, comprising a plurality of sealing sleeves (521, 523, 525, 621, 623, 625, 721, 723, 725, 821, 823, 825) arranged concentrically around the removable core (503, 603, 703, 803), which are connected with each other and with the removable core (503, 603, 703, 803) via a predetermined breaking web or a predetermined tearing web (515, 615, 715, 815) extending in the radial direction, **characterized in that** at least one of the sealing sleeves (521, 523, 525, 621, 623, 625, 721, 723, 725, 821, 823, 825) has a radial wall thickness different from the radial wall thickness of the other (521, 523, 525, 621, 623, 625, 721, 723, 725, 821, 823, 825) sealing sleeves.

13. The sealing disc according to claim 12, **characterized in that** the maximum radial wall thickness of the sealing sleeves (821, 823, 825) increases from the radial outermost sealing sleeve (825) towards the radial innermost sealing sleeve (821), wherein in particular the radial innermost sealing sleeve (821) is 1.2 times as thick as the radial outermost sealing sleeve, and/or that the difference in wall thickness between a sealing sleeve with the maximum wall thickness and a sealing sleeve with the minimum wall thickness is more than 5% and at most 30%, in particular between 10% and 25%, preferably 20%, in relation to the wall thickness of the sealing sleeve with the minimum wall thickness.

14. The sealing disc according to one of the claims 12 or 13, **characterized in that** the sealing sleeves (821, 823, 825) each comprise a high wall thickness axial sleeve section, in particular arranged axially centred, and at least one low wall thickness axial sleeve section arranged axially eccentric, which is preferably separated from the high wall thickness axial sleeve section by a stepped shoulder, wherein in particular the high wall thickness axial sleeve section of one of the sealing ring cylinders (821, 823, 825) has radial ring cylinder wall thickness (d₁, d₂, d₃) different from that of the corresponding high thickness axial sleeve sections of the other sealing ring cylinders (823, 825, 821).

15. The sealing disc according to one of the preceding claims, **characterized in that** the sealing disc (101, 201, 301, 401, 501, 601, 701, 801) consists of an elastomer, such as a thermoplastic elastomer or ethylene propylene diene rubber.

## Revendications

1. Rondelle d'étanchéité pour étanchéification en forme de conduit d'une ouverture d'alimentation pour un conduit, comme un câble ou une gaine de câble, dans un tuyau pour la pose de conduits ou un boîtier, comprenant :
- une surface périphérique de compression (109, 209, 309, 409, 509, 609, 709, 809) qui fournit un contact étanche au tuyau ou au boîtier,
- au moins un noyau (103, 203, 303, 403, 503, 603, 703, 803) qui peut être enlevé pour créer un logement de passage pour le conduit, et
- au moins une fente (105, 205, 305, 405, 605, 705, 805) s'étendant radialement de la surface périphérique de compression (109, 209, 309, 409, 509, 609, 709, 809) vers le noyau à travers l'épaisseur axiale de la rondelle d'étanchéité (101, 201, 301, 401, 501, 601, 701, 801) par laquelle le conduit peut être radialement inséré,
la fente (105, 205, 305, 405, 605, 705, 805) étant formée par des surfaces de séparation de fente (111, 113, 211, 213, 311, 313, 411, 413, 611, 613, 711, 713, 811, 813) complémentaires en forme situées l'une à côté de l'autre le long d'un profilé de liaison, une des surfaces de séparation de fente (111, 113, 211, 213, 311, 313, 411, 413, 611, 613, 711, 713, 811, 813) constituant une poche de liaison et l'autre surface de séparation de fente un ergot de liaison, **caractérisée en ce que** la profondeur de poche ou la hauteur d'ergot dans la direction périphérique représente 1/5 à 1/3 du diamètre de rondelle d'étanchéité.

2. Rondelle d'étanchéité selon la revendication 1, **caractérisée en ce que** le profilé de liaison comporte deux courbures ou pliures moulées disposées à distance axiale l'une de l'autre, notamment à la même hauteur périphérique, qui forment notamment une ouverture de liaison dans une des surfaces de séparation de fente (111, 113, 211, 213, 311, 313, 411, 413, 611, 613, 711, 713, 811, 813) et à laquelle se raccorde notamment respectivement une section de contact de liaison (112, 114, 212, 214, 312, 314, 412, 414).

3. Rondelle d'étanchéité selon l'une quelconque des revendications précédentes , **caractérisée en ce que** le profilé de liaison comporte une section de contact de liaison (112, 212, 312, 412) faisant saillie avec un composant de direction périphérique prédominant et une section de contact de liaison (114, 214, 314, 414) en retrait avec un composant de direction périphérique prédominant, les sections de contact de liaison (112, 114, 212, 214, 312, 314, 412, 414) faisant saillie notamment de la même distance périphérique, et/ou comportant les mêmes composants de direction périphérique, et/ou passant perpendiculairement à la direction axiale, et/ou **en ce que** le profilé de liaison comporte au moins trois pliures ou courbures moulées, le profilé de liaison passant notamment de façon rectiligne entre les pliures ou courbures moulées.

4. Rondelle d'étanchéité selon l'une quelconque des revendications précédentes, **caractérisée en ce que** les surfaces de séparation de fente (111, 113, 211, 213, 311, 313, 411, 413, 611, 613, 711, 713, 811, 813) comportent respectivement au moins une section de contact d'étanchéité axiale (117, 217, 317, 417), qui est disposée dans le profilé de liaison entre au moins deux pliures ou courbures moulées, au moins une section de contact d'étanchéité axiale (117, 217, 317, 417) s'étendant dessus entre 1/8 et 1/6 de l'épaisseur axiale de la rondelle d'étanchéité (101, 201, 301, 401, 501, 601, 701, 801).

5. Rondelle d'étanchéité selon l'une quelconque des revendications précédentes, **caractérisée en ce que** les surfaces de séparation de fente (111, 113, 211, 213, 311, 313, 411, 413, 611, 613, 711, 713, 811, 813) comportent respectivement au moins trois sections de contact d'étanchéité axiale (116, 117, 118, 216, 217, 218, 316, 317, 318, 416, 417, 418) qui sont notamment séparées d'une des autres sections de contact d'étanchéité axiale (116, 117, 118, 216, 217, 218, 316, 317, 318, 416, 417, 418) respectivement par au moins une courbure moulée ou une pliure moulée dans le profilé de liaison et/ou une section de contact de liaison (112, 114, 212, 214, 312, 314, 412, 414) passant en direction périphérique.

6. Rondelle d'étanchéité selon l'une quelconque des revendications précédentes, **caractérisée en ce que** les surfaces de séparation de fente (111, 113, 211, 213, 311, 313, 411, 413, 611, 613, 711, 713, 811, 813) sont respectivement constituées symétriques à l'axe par rapport au centre axial de la rondelle d'étanchéité (101, 201, 301, 401, 501, 601, 701, 801) et/ou la largeur de poche ou largeur d'ergot axiale est d'au moins 20 % de l'épaisseur axiale de la rondelle d'étanchéité (101, 201, 301, 401, 501, 601, 701, 801).

7. Rondelle d'étanchéité selon l'une quelconque des revendications précédentes, comprenant au moins un manchon d'étanchéité (521, 523, 525, 621, 623, 625, 721, 723, 725, 821, 823, 825) démontable disposé de façon concentrique autour du noyau démontable (503, 603, 703, 803), qui est relié au noyau démontable (503, 603, 703, 803) par une nervure de cassure facultative ou de rupture facultative (515, 615, 715, 815) s'étendant dans un plan radial et une paroi intérieure de manchon (531, 533, 535, 631, 633, 635, 731, 733, 735, 831, 833, 835) pour réaliser un contact d'étanchéité avec la ligne, **caractérisée en ce que** la paroi intérieure de manchon (531, 533, 535, 631, 633, 635, 731, 733, 735, 831, 833, 835) s'élargit et/ou se réduit radialement dans son profil axial.

8. Rondelle d'étanchéité selon la revendication 7, **caractérisée en ce que** la paroi intérieure de manchon (531, 533, 535, 631, 633, 635) s'élargit et/ou se rétrécit de façon conique, et/ou **en ce que** la paroi intérieure de manchon (731, 733, 735, 831, 833, 835) s'élargit et/ou se rétrécit graduellement en formant au moins un gradin, la paroi intérieure de manchon (731, 733, 735, 831, 833, 835) notamment étant constituée parallèle à l'axe excepté au moins un gradin, et/ou au moins un gradin étant constitué respectivement sur la paroi intérieure de manchon (831, 833, 835) dans le profil axial avant et après la nervure de cassure facultative ou de rupture facultative (815).

9. Rondelle d'étanchéité selon l'une quelconque des revendications 6 à 8, **caractérisée en ce qu'**au moins un manchon d'étanchéité (621, 623, 625, 721, 723, 725) comporte une épaisseur de paroi radiale constante, et/ou **en ce qu'**au moins un manchon d'étanchéité (521, 523, 525, 821, 823, 825) comporte une épaisseur de paroi diminuant axialement vers l'extérieur notamment de façon symétrique par rapport à un centre axial de la rondelle d'étanchéité (501, 801).

10. Rondelle d'étanchéité selon l'une quelconque des revendications précédentes, **caractérisée en ce qu'**une paroi extérieure de manchon (641, 643, 645, 741, 743, 745) d'au moins un manchon d'étanchéité (621, 623, 625, 721, 723, 725) s'élargit et/ou se réduit radialement notamment de façon conique dans son profil axial, la paroi extérieure de manchon (641, 643, 645) notamment se rétrécissant axialement vers l'extérieur de façon conique depuis le centre axial de la rondelle d'étanchéité (601) ou la paroi extérieure de manchon (741, 743, 745) s'élargissant ou se rétrécissant radialement en formant un gradin de paroi dans le centre axial de la rondelle d'étanchéité (701).

11. Rondelle d'étanchéité selon l'une quelconque des revendications 6 à 9, **caractérisée en ce qu'**une paroi extérieure de manchon (641, 643, 645, 741, 743, 745, 841, 843, 845) d'au moins un manchon d'étanchéité (621, 623, 625, 721, 723, 725, 821, 823, 825) s'étend parallèlement à la paroi intérieure de manchon, et/ou une paroi extérieure de manchon (541, 543, 545, 741, 743, 745, 841, 843, 845) d'au moins un manchon d'étanchéité (521, 523, 525, 721, 723, 725, 821, 823, 825) s'étend parallèlement à l'axe.

12. Rondelle d'étanchéité selon l'une quelconque des revendications précédentes comprenant plusieurs manchons d'étanchéité (521, 523, 525, 621, 623, 625, 721, 723, 725, 821, 823, 825) disposés de façon concentrique autour du noyau (503, 603, 703, 803) démontable qui sont reliés entre eux et au noyau (503, 603, 703, 803) démontable par une nervure de cassure facultative ou de rupture facultative (515, 615, 715, 815) s'étendant dans la direction radiale, **caractérisée en ce qu'**au moins un des manchons d'étanchéité (521, 523, 525, 621, 623, 625, 721, 723, 725, 821, 823, 825) comporte une épaisseur de paroi radiale différente des autres manchons d'étanchéité (521, 523, 525, 621, 623, 625, 721, 723, 725, 821, 823, 825).

13. Rondelle d'étanchéité selon la revendication 12, **caractérisée en ce que** l'épaisseur de paroi radiale maximale des manchons d'étanchéité (821, 823, 825) augmente du manchon d'étanchéité (825) radialement le plus extérieur vers le manchon d'étanchéité (821) radialement le plus intérieur, le manchon d'étanchéité (821) radialement le plus intérieur notamment étant 1,2 fois aussi épais que le manchon d'étanchéité (825) radialement le plus extérieur, et/ou **en ce que** la différence des épaisseurs de paroi d'un manchon d'étanchéité d'épaisseur de paroi maximale et d'un manchon d'étanchéité d'épaisseur de paroi minimale est de plus de 5 % et au maximum de 30 %, notamment entre 10 % et 25 %, de préférence de 20 % en se référant à l'épaisseur de paroi du manchon d'étanchéité d'épaisseur de paroi minimale.

14. Rondelle d'étanchéité selon l'une quelconque des revendications 12 ou 13, **caractérisée en ce que** les manchons d'étanchéité (821, 823, 825) comprennent respectivement une section axiale de manchon disposée notamment axialement de façon centrale d'épaisseur de paroi élevée et au moins une section axiale de manchon disposée notamment axialement excentrée d'épaisseur de paroi faible, qui est séparée de préférence de la section axiale de manchon d'épaisseur de paroi élevée par un décrochement en forme de gradin, la section axiale de manchon d'épaisseur de paroi élevée d'un des cylindres annulaires d'étanchéité (821, 823, 825) notamment comportant une épaisseur de paroi de cylindre annulaire radiale différente (d₁, d₂, d₃) des sections axiales de manchon respectives d'épaisseur de paroi élevée des autres cylindres annulaires d'étanchéité (823, 825, 821).

15. Rondelle d'étanchéité selon l'une quelconque des revendications précédentes, **caractérisée en ce que** la rondelle d'étanchéité (101, 201, 301, 401, 501, 601, 701, 801) est composée d'un élastomère, comme un élastomère thermoplastique ou un caoutchouc éthylène-propylène-diène.
